# EUROPEAN PATENT SPECIFICATION

(11) **EP 3 278 534 B1**
(45) Date of publication and mention of the grant of the patent: **03.06.2020**
(21) Application number: 16715429.3
(22) Date of filing: 29.03.2016
(51) Int. Cl.: H04L 29/06

(54) **NETWORKING FLOW LOGS FOR MULTI-TENANT ENVIRONMENTS**
VERNETZUNG VON FLUSSPROTOKOLLEN FÜR MANDANTENFÄHIGE UMGEBUNGEN
JOURNAUX DE FLUX DE RÉSEAU POUR ENVIRONNEMENTS MULTI-UTILISATEURS

(30) Priority: 30.03.2015 US 201514673516
(43) Date of publication of application: 07.02.2018
(73) Proprietor: Amazon Technologies, Inc., Seattle, Washington 98108 (US)
(72) Inventor: BANERJEE, Rajat, Seattle, Washington 98109-5210 (US); MILLER, Nathan Andrew, Seattle, Washington 98109-5210 (US); DIVECHA, Aniket Deepak, Seattle, Washington 98109-5210 (US); ZHAO, Mingxue, Seattle, Washington 98109-5210 (US); YE, Shuai, Seattle, Washington 98109-5210 (US); MILLER, Kevin Christopher, Seattle, Washington 98109-5210 (US); KERL, John Robert, Seattle, Washington 98109-5210 (US)
(74) Representative: Burton, Nick
(86) International application number: PCT/US2016/024789
(87) International publication number: WO 2016/160848

(56) References cited:
- US-A1- 2003 149 888
- US-A1- 2011 078 309
- US-A1- 2015 067 171

## Description

### CROSS REFERENCE TO RELATED APPLICATION

This application incorporates by reference for all purposes the full disclosure of co-pending U.S. Patent Application No. 14/673,516, filed March 30, 2015, entitled "NETWORKING FLOW LOGS FOR MULTI-TENANT ENVIRONMENTS".

### BACKGROUND

In a large distributed computing system of a computing resource service provider, various customers, users, services, and resources of the computing resource service provider are in frequent communication with each other. Keeping the system secure becomes more challenging as applications are updated and as the complexity and usage of the system increases. In such distributed computing systems, it can be difficult to identify the vulnerabilities of the system. Furthermore, it can also be difficult to isolate and troubleshoot issues with the system, and even when issues are identified, reliably securing the system may be challenging. Additionally, many conventional systems rely upon manual mitigation of such vulnerabilities. The complexity and distribution of computing resources in these environments may make it difficult to collect and analyzes log information generated by the computing resources.

A known system is disclosed in US 2011/078309.

According to an aspect of the present invention, there is provided a system according to claim 1.

According to another aspect of the present invention, there is provided a method according to claim 9.

### BRIEF DESCRIPTION OF THE DRAWINGS

Various embodiments in accordance with the present disclosure will be described with reference to the drawings, in which:
FIG. 1 illustrates an environment in which a computing resource service provider may provide customers with access to computer log information generated by computer systems operated by the computing resource service provider in accordance with an embodiment;
FIG. 2 is an illustrative, simplified block diagram of a server computer system that may be used to collect computer log information generated by computer systems operated by the computing resource service provider in accordance with an embodiment
FIG. 3 illustrates a webpage which may be displayed by an application executed by a computing device enabling a user to interact with a network logging service operated by a computing resource service provider in accordance with an embodiment;
FIG. 4 illustrates an example environment where a network log visualization browser may be used to display network flow diagrams in accordance with an embodiment;
FIG. 5 illustrates an example environment where a network log visualization browser may be used to display network flow diagrams in accordance with an embodiment;
FIG. 6 illustrates an environment which includes a computing resource service provider in data communication with a client device and server computers over a network in accordance with an embodiment;
FIG. 7 is an illustrative process which may be used to provide log information corresponding to a computer system instance in a multi-tenant environment in accordance with an one embodiment;
FIG. 8 is an illustrative process which may be used to provide log information corresponding to a computer system instance in a multi-tenant environment in accordance with an embodiment;
FIG. 9 illustrates an environment in which a customer is connected to a computing resource service provider; and
FIG. 10 illustrates an environment in which various embodiments can be implemented.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiments being described.

Techniques described and suggested herein relate to improvement in network logging and computer logging in multi-tenant computing resource service provider environments. A computing resource service provider may operate computing resources programmatically managed by the customer of the computing resource service provider. For example, the computing resource service provider may operate a virtual computer system service and an on-demand storage service, these services may provide computing resources to customers of the computing resource service provider. The customer may then remotely load software, configure, start, stop, and perform other operations in connections to the computer resources made accessible to the customer by the computing resource service provider. The computing resource service provider may leverage the computer systems implementing the services provided to the customers by allowing over-subscription of the computing resources. Furthermore, at least a portion of the computing resources provided to the customer may be virtualized. For example, the computing resource service provider may provide virtual computer systems to the customer, which that customer may use to implement various applications, such as a web server.

The computing resource service provider may also implement a firewall or other security features in order to protect customer information. As a result of these security features and the virtualized computing environment, network log information and other computer log information may not be accessible to the customer. The computing resource service provider may collect the log information on behalf of the customer, package the information, and provide the information to the customer. Additionally, the computing resource service provider may provide the log information to a destination indicated by the customer. For example, the computing resource service provider may provide the log information to a metrics service or intrusion detection service. The metrics service may generate visualizations, alerts, and on information corresponding to the log information on behalf of the customer. For example, the metrics service may provide the customer with current network load on the customer's virtual computer system instance. The intrusion detection service may use the log information to perform various attack mitigation and attack detection operations. Furthermore, the intrusion detection system may use the log information to update firewall settings, intrusion detection settings, and other security settings of various computing systems operated by the computing resource service provider. An intrusion prevention system may also use the log information to determine and apply a set of security policies. For example, the intrusion prevention system may limit the types of data that may be transmitted by or obtained from a customer virtual computer system instance.

The computing systems providing the computing resources to the customer may include a logging entity configured to obtain network log and computer log information corresponding to computing resources provided to particular customers. The logging entity may obtain log information directly from the computing system or a component of the computer system. For example, the computing system may include a firewall configured to block particular traffic directed to customer computer system instances. The logging entity may obtain network log information from the firewall and cause the log information to be persistently stored. The metrics service or some other service may determine information based at least in part on the log information stored by the logging entity. For example, the metrics service may determine an amount of traffic, a number of packets, or size of a particular network flow directed to a particular customer's computer system instance.

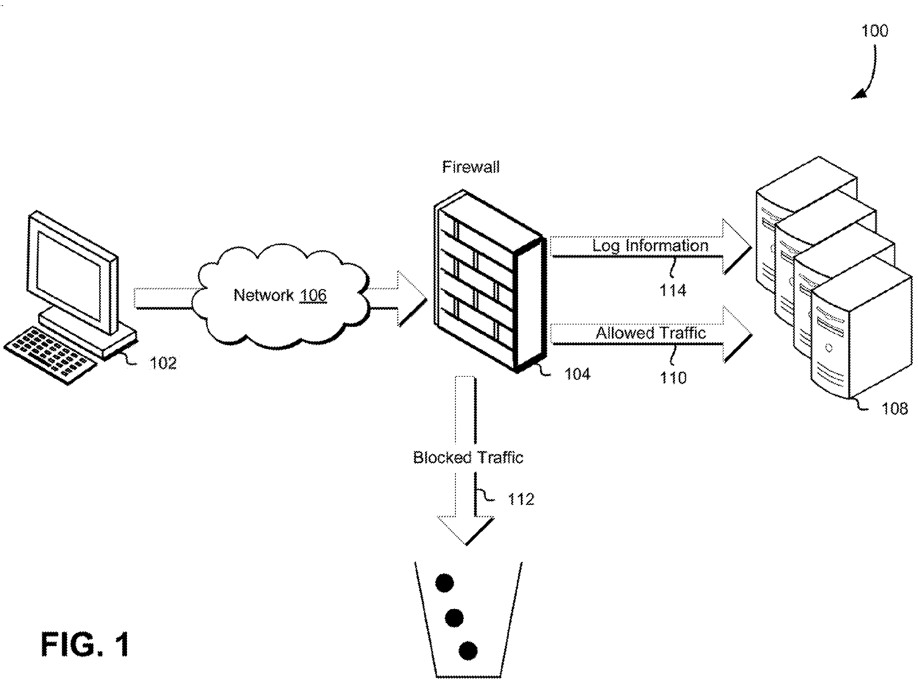

FIG. 1 illustrates an environment 100 in which a computing resource service provider may provide customers with access to computer log information 114 generated by computer systems operated by the computing resource service provider. The computing resource service provider may provide computing resources to customers 102. Furthermore, the customers 102 may request log information 114 from the computer resource service provider. A server computer system 108 may be configured to provide the computing resources to the customer 102. For example, the server computer system 108 may provide virtual computing capacity or storage capacity to the customer 102. The customer 102 and other entities may communicate with the server computer system 108 over a network 106. The network 106 may include a virtual private network, an intranet, the Internet, a cellular network, a local area network, a satellite network or any other such network and/or combination thereof.

Additionally, the sever computer system 108 may implement a firewall 104 to permit or deny communications based at least in part on a security policy. In some examples, this firewall may block one or more ports of the target computing system or target virtual computer system instance unless those ports are specifically "opened." In other words, data packets received at the server computer system 108 specifying the blocked 112 (i.e., unopened) ports may be ignored or may cause an error code to be sent to the source of the packets. If the traffic does not violate the security policies the traffic may be allowed 110 by the firewall 104 to reach the customers 102 computer system instances.

The server computer system 108 may organize computing resources assigned to customers in to resource groups such as firewalls, scaling groups and/or other such groups. One or more resources may be associated with and/or placed in resource groups indicating one or more resource groupings and/or one or more resource dependencies. Resource groups may be nested so that, for example, a scaling group may include one or more firewalls which may include one or more resources and/or may include one or more other resource groups. As used herein, the term firewall 104 may refer to hardware, software, or combination thereof configured to control inbound and outbound network traffic based at least in part on a policy. The firewall 104 may be configured to ensure this security by, for example, examining network traffic to verify that incoming and/or outgoing data packets conform to one or more security policies. The firewall 104 may further be configured to verify credentials of connections to resources, may be configured to validate those credentials using one or more policy services or perform combinations of these and/or other security-related functions. The firewall 104 may be implemented as hardware, software, firmware, a virtual device, or as a combination of these and/or other such implementation methods.

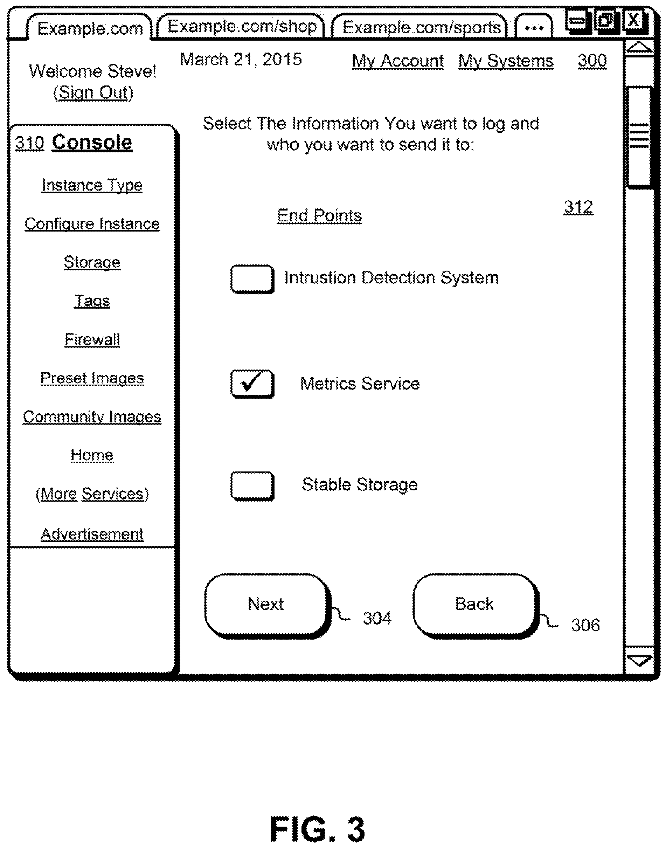

Furthermore, the server computer system 108 may include a logging entity (described in greater detail below) communicatively coupled to the firewall 104 such that the logging entity may obtain log information 114 from the firewall 104 and store the information using computing resources of the server computer system 108. The customer 102 or other entity may then access the log information 114 stored by the server computer system 108. The log information 114, as described in greater detail below, may include information corresponding to the customer, network interface, number of packets transmitted for a particular network flow, number of bytes for a particular network flow, source address, destination address, source port, destination port, action performed by the firewall 104, protocol associated with a particular network flow, an application associated with a particular flow, and other information logged by the server computer system 108. In various embodiments, a customer may cause the logging entity or other component of the server computer system 108 to filter the log information based at least in part on one or more attributes of the log information. For example, the customer may, through a management console described in greater detail below in connection with FIG. 3, cause the log information to be filtered such that the log information includes only log entries corresponding to network packets and/or network flows denied or blocked by the firewall 104. In yet another example, the customer may request filtered log information from a metrics service (described in greater detail below), the metrics service may then filter the log information obtained from the logging entity for the information requested by the customer.

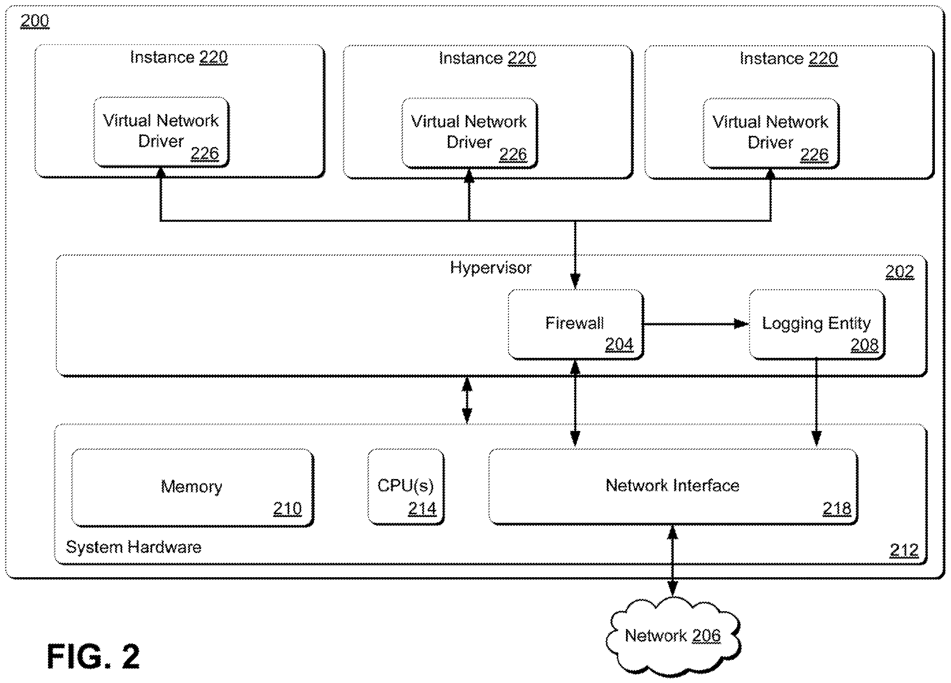

FIG. 2 is an illustrative, simplified block diagram of a server computer system 200 that may be used to practice at least one embodiment of the present disclosure. The server computer system 200 may contain system hardware 212, the system hardware 212 may be used to support the execution of a variety of applications. The system hardware 212 may include memory 210, one or more central processing units (CPUs) 214, and a network interface 218. The system hardware 212 may include other hardware devices not shown in FIG. 2 for simplicity, the other hardware device may store devices, graphics devices, input output (I/O) controller or any other hardware device suitable for supporting the execution of one or more hypervisors 202 or other applications. The one or more central processing units 214 (also referred to as processors for simplicity) may be communicatively coupled to a number of systems or hardware devices, such as the memory 210, and the network interface 218. The server computer system 200 may also include several applications, including a hypervisor 218 and a computer system instance 220, which may include as illustrated in FIG. 2 a virtual network driver 226. The virtual network driver 226 may provide a network interface for the customer computer system instances 220.

The hypervisor 202 may be a set of computer executable instructions, that when executed by one or more processors of the server computer system 200, causes the system to provide a virtual operating platform and manage access to the system hardware 212. Furthermore, the hypervisor 202 may provide support for computer system instance 220. Computer system instances 220 may be a virtual computer system configured to execute one or more applications implemented by the customer. For example, the computer system instance 220 may execute a web server operated by the customer. The computer system instance 220 may also be communicatively coupled to the hypervisor 202 to enable hypervisor management commands received from the customer to be transmitted to the hypervisor 202.

The memory 210 may provide a computer-readable storage medium for storing data that may provide the functionality of at least one embodiment of the present disclosure. The data stored in the memory 210 (programs, code modules, instructions) that, when executed by one or more processors 214, may provide the functionality of one or more embodiments of the present disclosure. These application modules or instructions may be executed by the one or more processors 214. The network interface 218 may be network interfaces connected to the computing system 200. The network interface 218 may be a hardware, software, or combination thereof configured to receive and transmit application data, such as computer system instance 220, over a network 206 to one or more other computing systems. Although only one enhanced network interface 218 is shown in FIG. 2, multiple network interfaces 218 may be connected to computing system 200 in accordance with the present disclosure. The network interfaces 218 may be configured to send and receive application data through the virtual network driver 226 included in the computer system instance 220.

The server computer system 200 may also include a firewall 204. The firewall 204 may be configured to permit or block network traffic based at least in part on one or more security policies provided by the customer or computing resource service provider. The firewall 204 may be implemented as hardware, software, or a combination thereof. For example, the firewall 204 may include a kernel module configured to filter network traffic directed to computer system instances 220 implemented by the server computer system 200. In addition, the server computer system may include a logging entity 208 configured to obtain log information from the firewall 204.

The logging entity 208 allows customers to obtain log information regarding network traffic flows to and from the virtual network driver 226 of the server computer systems 200. The log information captured by the logging entity 208 includes customer identification information, virtual network driver identification information, packet count, byte count, timestamp corresponding to the start of the network flow, timestamp corresponding to the end of the network flow, and an action performed by the firewall 204. The logging entity 208 can publish the log information to a storage device, computing service, or server computer system. For example, the logging entity may be configured to publish the log information to a metrics service described in greater detail below. Additionally, the logs may be published at various intervals of time or may be streamed directly to the receiving party as the logs are generated. For example, streaming the log information to an intrusion detection system may enable real-time or near real-time attack mitigation.

The network log information may enable the customer to troubleshoot various customer networks. The customer networks may include resources provided by the computing resource service provider as well as computing resources operated by the customer, for example, on premise computing resources. In a specific troubleshooting example, a least some network traffic may not be reaching the customer's computer instances provided by the computing resource service provider. The network log information may include information corresponding to denied network traffic to the customer's computer instance, enabling the customer to see that a firewall or other device may be blocking inbound traffic to the customer's computer instance. Alternatively, the network log information may indicate to the customer that the source traffic from another computer instance is being blocked and is not reaching the filters on a second computer instance.

The network log information may also be used in connection with intrusion detection and mitigation systems. For example, if the customer's computer instance has been compromised the network log information may indicate that the customer's computer instance is performing port scans of other network interfaces of computer instances in the customer's virtual private network, or port scans against Internet hosts, or the computer instance is transmitting files to an Internet host. Additionally, the network log information may indicate a potential attack that might be mounting. For example, the network log information may include denied SSH traffic going to multiple computer instances operated by the customer, the customer may then take specific countermeasures as per the customer's corporate policy.

The network logging information may be provided to a metrics service. The metrics service, described in greater detail below, may provide various visualizations to the customer such as accepted traffic to the customer instances, traffic patterns to the customer's instances, and other visualizations. The network log information may also include information corresponding to specific user sessions or IP sessions. In addition to metrics services, the network log information may be used for network analysis. The analysis and/or metrics service may also include alarms configured to transmit notifications to customers in response to detected events or attributes, for example, if the network traffic to the customer's computer instance is above a threshold for an interval of time or the customer's computer instance is receiving no network traffic for an interval of time.

Network log information may include a variety of different elements including format version, customer account identification information, network interface identification information on which the flow is captured, source address of the flow, destination address of the flow, source port of the flow, destination port of the flow, protocol in use by the flow, calculated number of packets seen in the flow during a sampling window, a number of bytes seen in the flow during the sampling window, start of the sampling period for which flow is detected, end of the sampling period for which flow is detected, and an action associated with the flow. The action may include a variety of actions taken by the firewall or other device implements by the computing resource service provider such as accept, deny, or no data.

FIG. 3 shows a webpage 300 which may be displayed by an application executed by a computing device enabling a user to interact with a network logging service operated by a computing resource service provider. The webpage 300 provides the user the ability to select a variety of options for controlling providing network log and/or computer log information to an end point. Network log information may include information corresponding to any transfer of some amount of data between two endpoints (such as a pair of applications or a pair of modules of the same application, typically running on different physical hosts) in accordance with one or more networking protocols. It is noted that although, for ease of explanation, much of the following description refers to a source and a destination for a given network transmission, either direction for a bi-directional transmission between the two endpoints involved in the transmission may each be considered either a source or a destination for different subsets of the bi-directional traffic. The computer log information may include any information records by a computer system corresponding to the operation of the computer system, such as actions taken, error codes, or the result of an operation.

As illustrated in FIG. 3, the webpage 300 includes various graphical user interface elements that enable customers to provision, manage, and interact with computer instances through a management console of which the webpage 300 is a part. The webpage 300 may be displayed by various applications, such as a mobile application or a web browser. In this example, the webpage 300 includes various navigational features. For instance, on the lefthand side of the webpage 300, various links 310 may link to one or more other webpages that contain additional content corresponding to a variety of different actions the customer may cause to be performed. The console pages may correspond to operations that may be taken to manage or otherwise control virtual machine instances by the virtual machine management service described in greater detail below. In this example, the links appear as textual words which enable the links to be selected using an appropriate input device such as a keyboard, mouse, touchscreen, or other input device. Selection of one of the links 310 may cause an application displaying the webpage 300 to submit, pursuant to a URL associated with the selected link by the programming of the webpage 300, an HTTP request for the content associated with the link to a server that provided the webpage 300 or another server.

In this example, the webpage 300 also includes a graphical user element configured as a "next" button 304. The next button 304 may be a graphical user interface element of the webpage 300 where the underlying code of the webpage 300 is configured such that selection by an input device of the next button 304 causes information corresponding to the selection of an endpoint for the network log information and/or computer log information on the webpage 300 to be transmitted to one or more server computer systems of the computing resource service provider, such as the server computer systems responsible for executing the virtual machine management service. Through the management console, the customer may be guided through the process of setting up logging for a particular computer system instance. The process may be divided into steps and the customer may be prompted to provide information at each step. For example, the webpage 300 displays to the customer a list of different types of log information that may be collected. The customer, using an input device, may select various attributes of the computer instance and/or networking environment of the computer instance. The customer selection may be stored until the entire process is completed or the customer selection may be transmitted to the virtual machine management service upon selection of the next button 304. Although end point for log information selection is shown in FIG. 3, the customer may be prompted to select any operating parameters and/or software application to be executed by the computer instance once instantiated.

In various embodiments, the service provider may determine the particular type of virtualization layer for the user based at least in part on various factors such as type of log information selected by the user, quantity of log information selected by the user, operating system selected by the user, features of the operating system selected by the user, particular features selected by the user, applications selected by the user, availability of particular virtualization layer, cost associated with a particular virtualization layer, or other factors suitable for selecting virtualization layers based on user information. In these embodiments, the user may or may not be presented with the ability to select a particular virtualization layer but may be presented with a selection of whether to enable logging of network transmission to and/or from the user's computer system instance. If the user selects to enable or disable logging, the user may be presented with the option to select between the user-selection and the service-provider-determined selection.

The webpage 300 may also include a graphical user element configured as a "back" button 306. The back button 306 may be a graphical user interface element of the webpage 300 where the underlying code of the webpage 300 causes the application displaying the webpage 300 to navigate to a previously navigated webpage. Once the customer has made a selection using the webpage 300 and selected the next button 304, the application displaying the webpage 300 may submit an HTTP request for provision or modification of a computer system instance supported by a virtualization layer configured to enable or disable logging for the computer system instance. The request may be transmitted to one or more server computer systems or services of the computing resource service provider. For example, the request may be transmitted to the virtual machine management service operated by the computing resource service provider. The virtual machine management service may then select, based at least in part on the customer selection, a physical host (e.g., server computer system) capable of performing the selected network logging or computer logging information and cause the physical host to instantiate a computer system instance on behalf of the user. At some point in time after the computer system instance is instantiated, the virtual machine management service may pass operation of the virtual machine to the user. The virtual machine management service or some other service of the computing resource service provider may select the physical host based at least in part on a variety of factors beyond the logging options selected by the user, including a particular geographic area based at least in part on an Internet Protocol (IP) address associated with the request and the user, load on one or more physical hosts, network traffic associated with the one or more physical hosts, request response latency of the one or more physical hosts or any other information suitable for selecting a physical hosts to instantiate one or more computer instances.

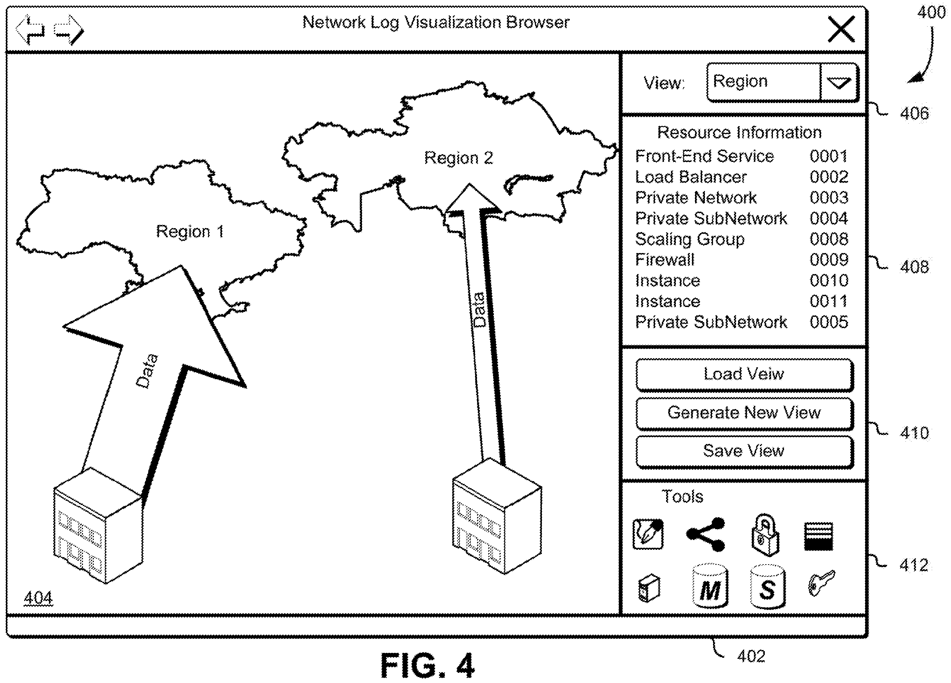

FIG. 4 illustrates an example environment 400 where a network log visualization browser may be used to display network flow diagrams as described herein at least in connection with FIGS. 1 and 2 and in accordance with at least one embodiment. A network log visualization browser 402 may be configured to produce network flow visualization diagrams using network log information as described herein above, save network flow diagrams, load network flow diagrams, apply filtering and/or analysis processes to network flow diagrams and/or perform other such processes associated with network flow visualization. The network log visualization browser 402 may be configured as a computer service such as a web service and may be provided as a service by the computing resource service provider as described herein at least in connection with FIG. 1.

The network log visualization browser 402 may include functionality 410 to perform operations such as loading network flow information, generating network flow visualizations, saving network flow visualizations and/or other such functionality. Network log information may be saved in a network log repository, a data store or some other such location. Network flow visualizations may also be saved in a repository, data store or some other such location. The network log visualization browser 402 may include functionality 408 to display at least a subset of the network log information and may also include functionality to display the filtered results of the network log as a result of applying one or more filtering processes 406. The filtering processes 406 may be based at least in part on one or more tags as described herein above.

The network log visualization browser 402 may further be configured to produce a network flow diagram 404 based at least in part on the network log information and/or based at least in part on the filtered network log information. The network flow diagram 404 may be displayed using block diagrams, generated images, or visualization elements and may, in some embodiments, include one or more icons. The network log visualization browser 402 may include a set of tools 412 used to perform various functionality in connection with the displayed network flow diagram 404. The set of tools 412 may be a set of functions included in the network log visualization browser 402 that enables the customer to perform a variety of operations such as analyzing the network flow diagram 404 or altering the network flow diagram 404.

As illustrated in FIG. 4, the network flow diagram 404 may be based at least in part on the topology of a customer's computer system instance and may include relationships (such as arrows) indicating connections and/or dependencies between the resources, resource groups, or networks represented by the blocks and/or icons and various regions. In the example illustrated in FIG. 4 the arrows indicating connections may also indicate an amount of network traffic transmitted from the customer's computer system instances for various regions. The regions may be geographic regions or may be networks or other groups of computing resources. In various embodiments, the network flow diagram 404 additionally includes text elements displaying, for example, tags associated with resource types, tags associated with resource instances, tags associated with resource groups, tags associated with networks or combinations of these and/or other such tags. The network flow diagram 404 may additionally include text elements displaying other data and/or metadata associated with the resources, the resource groups, the networks, the structured description and/or the computer system. In some embodiments, the network log visualization browser 402 may include functionality to update (or refresh) the network flow diagram 404 and may, in some embodiments, include functionality to provide settings relating to that update. For example, the network flow diagram 404 may be updated automatically once additional network log information is generated by the server computer system implementing the customer computer system instances.

As may be contemplated, the contents of the network log visualization browser 402 illustrated herein relating to browser functionality, display modalities, the presence and type of text elements, the presence and type of icon elements and/or other such user interface elements described herein in connection with the network log visualization browser 402 are merely illustrative examples indicating an embodiment of the network log visualization browser 402. As such, other types of browser functionality, display modalities, presence and type of text elements, presence and type of icon elements and/or other such user interface elements may be considered as within the scope of the present disclosure.

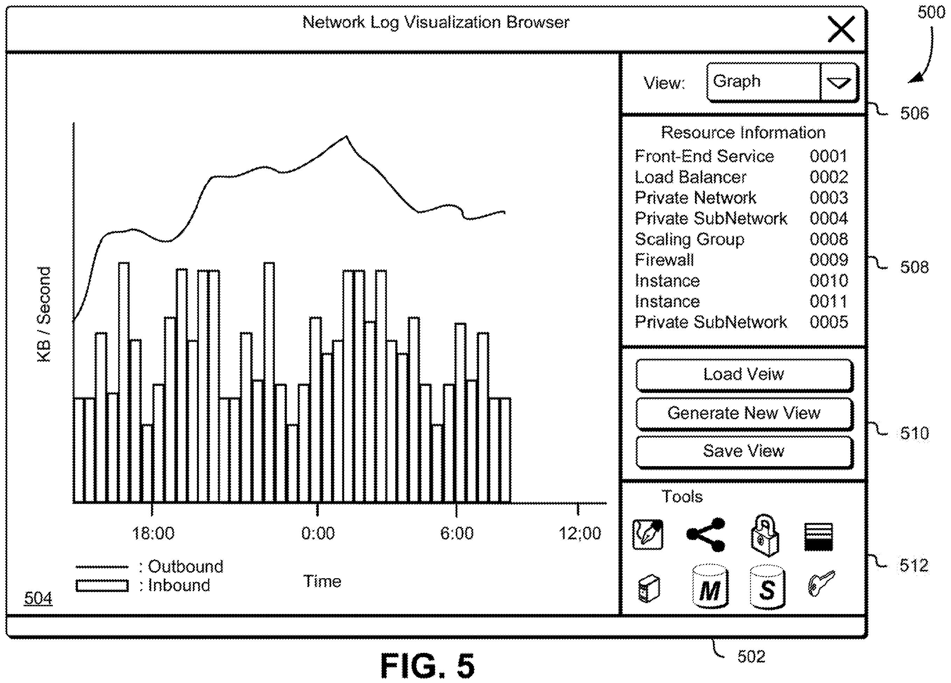

FIG. 5 illustrates an example environment 500 where a network log visualization browser may be used to display network flow diagrams as described herein at least in connection with FIGS. 1 and 2 and in accordance with at least one embodiment. A network log visualization browser 502 may be configured to produce network flow visualization diagrams using network log information as described herein above, save network flow diagrams, load network flow diagrams, apply filtering and/or analysis processes to network flow diagrams and/or perform other such processes associated with network flow visualization. The network log visualization browser 502 may be configured as a computer service such as a web service and may be provided as a service by the computing resource service provider as described herein at least in connection with FIG. 1.

The network log visualization browser 502 may include functionality 510 to perform operations such as loading network flow information, generating network flow visualizations, saving network flow visualizations and/or other such functionality. Network log information may be saved in a network log repository, a data store or some other such location. Network flow visualizations may also be saved in a repository, data store or some other such location. The network log visualization browser 502 may include functionality 508 to display at least a subset of the network log information and may also include functionality to display the filtered results of the network log as a result of applying one or more filtering processes 506. The filtering processes 506 may be based at least in part on one or more tags as described herein above.

The network log visualization browser 502 may further be configured to produce a network flow diagram 504 based at least in part on the network log information and/or based at least in part on the filtered network log information. The network flow diagram 504 may be displayed using block diagrams, generated images, or visualization elements and may, in some embodiments, include one or more icons. The network log visualization browser 502 may include a set of tools 512 used to perform various functionality in connection with the displayed network flow diagram 504. The set of tools 512 may be a set of functions included in the network log visualization browser 502 that enables the customer to perform a variety of operations such as analyzing the network flow diagram 504 or altering the network flow diagram 504.

As illustrated in FIG. 5, the network flow diagram 504 may be based at least in part on the amount of network traffic transmitted from and received at the customer's computer system instances. The network log visualization browser 502 may generate one or more graphs to include in the network flow diagram indicating an amount of network traffic transmitted to and from the customer's computer system instances for various intervals of time. In various embodiments, the network flow diagram 504 additionally includes text elements displaying, for example, tags associated with resource types, tags associated with resource instances, tags associated with resource groups, tags associated with networks or combinations of these and/or other such tags. The network flow diagram 504 may additionally include text elements displaying other data and/or metadata associated with the resources, the resource groups, the networks, the structured description and/or the computer system. In some embodiments, the network log visualization browser 502 may include functionality to update (or refresh) the network flow diagram 504 and may, in some embodiments, include functionality to provide settings relating to that update. For example, the network flow diagram 504 may be updated automatically once additional network log information is generated by the server computer system implementing the customer computer system instances.

As may be contemplated, the contents of the network log visualization browser 502 illustrated herein relating to browser functionality, display modalities, the presence and type of text elements, the presence and type of icon elements and/or other such user interface elements described herein in connection with the network log visualization browser 502 are merely illustrative examples indicating an embodiment of the network log visualization browser 502. As such, other types of browser functionality, display modalities, presence and type of text elements, presence and type of icon elements and/or other such user interface elements may be considered as within the scope of the present disclosure.

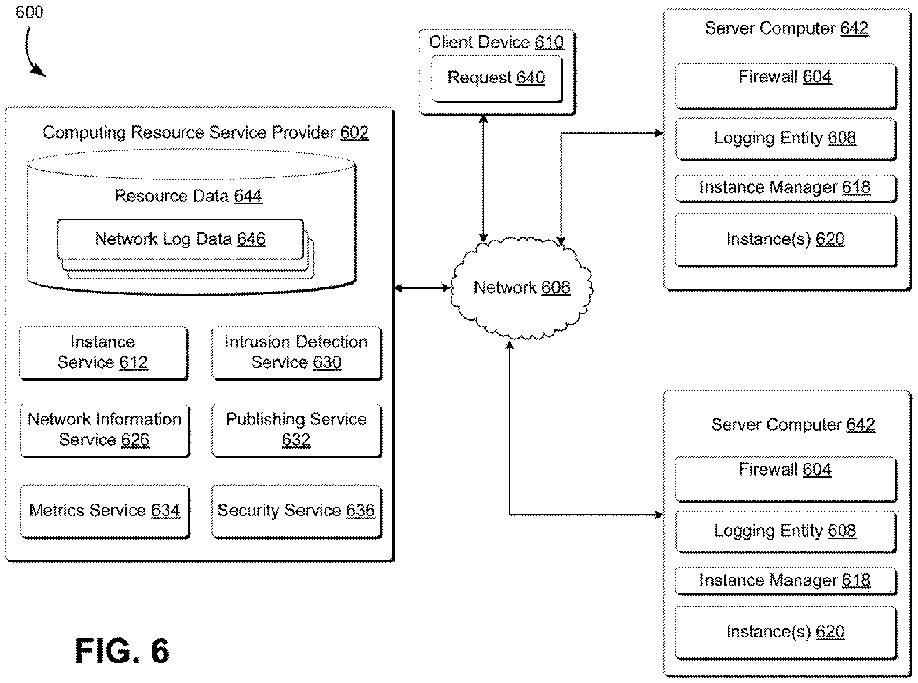

The environment such as that illustrated in FIG. 2 may be useful for a provider such as a computing resource provider, wherein the computing resource system responds to requests from customers to perform various logging functions in connection with a multi-tenant environment. As discussed above, the computing resource service provider provides a mechanism to allow customers to obtain network log information and computer log information associated with the customer's computer system instances. The environment in such a case may include additional components and/or other arrangements, such as those illustrated in the environment 600 of FIG. 6. In this example, the environment 600 includes a computing resource service provider 604 in data communication with a client device 610 and server computers 642 over a network 606. In one embodiment, the server computers 642 may be one or more computer hardware devices that are used to implement computer system instances 620, as described above in connection with FIG. 2. For example, the server computers 642 may include hardware for implementing types of computing resources, such as storage devices, virtualized storage devices, networking devices, and the like. Additionally, the implemented computing resources may be programmatically and remotely managed by a customer of the distributed computing resource provider.

The server computers 642 include a plurality of computer system devices that are each capable of executing one or more instances 620 created by the distributed computing resource service provider 604. In one embodiment, each of the server computers 642 includes a processor, a data store, an input/output bus, and/or any other component known in the art for executing instances 620. Additionally, the instances 620 may be virtual machine instances. As known in the art, a virtual machine instance is an instance of a software implementation on a machine (i.e., a computer) that executes programs like a physical machine. For example, each of the server computers 642 may be configured to execute an instance manager 618 capable of implementing the instances 620.

The instance manager 618 may be a hypervisor, virtualization layer, or another type of program configured to enable the execution of multiple instances 620 on a single server computer system 642, for example. As discussed above, each of the instances 620 may be configured to execute all or a portion of an application. Additionally, the network 606 may be similar to the network as described above. The networked environment 600 may span one or more data centers, where each data center may be geographically distinct from each other. Additionally, the networked environment 600 shown in FIG. 6 may be one of several embodiments employed by the computing resource service provider. The server computers 642 may further include a firewall 604 and a logging entity 608. The firewall 604 may be hardware, software, or combination thereof configured to manage network traffic to the instances 620 as described above. Furthermore, the logging entity 608 may be a set of computer executable instructions, that when executed by one or more processors of the sever computers 642, cause the sever computers 642 to obtain log information from the firewall 604 and/or the instance manager 618. For example, the logging entity 608 may obtain network log information from the firewall 604 and computer log information from the instance manger 618.

In one embodiment, the computing resource service provider 604 includes a data store containing resource data 644, an instance service 612, a network information service 626, an intrusion detection service 630, a publishing service 632, a metrics service 634, a security service 636, and/or other components. The resource data 644 may include data related to the server computers 642. For example, in one embodiment, the resource data 610 includes one or more records of server computer data 646. Each one of the records of the server computer data 646 corresponds to the server computers 642 of the networked environment 600.

The instance service 612 instantiates instances 620 based at least in part on a set of preferences provided by the customer. In one embodiment, the instance service 612 receives, from the customer on the client device 610, a request 640 to create one or more instances 620 and optionally assign the logging entity 608 to log information corresponding to the operation of the instances 620. Additionally, the request 640 received from the customer operating the client device 610 may also indicate a time to start execution of the requested instances 620. In response to receiving the request, the instance service 612 instantiates instances 620. In various embodiments, the intrusion service 630 or metrics service 634 receives the request 640 and transmits a command to the instance service 612 to begin logging information associated with the instances 620 and store the log data in the resource data 644 data store, such as network log data 646.

The customer may interact with the computing resource service provider 604 (via appropriately configured and authenticated API calls) to create, delete, and describe log information collected from instances 620 that are instantiated on server computers 642 and operated by the computing resource service provider 604. Additionally, the customer may create one or more security groups using the security service 636, the security groups may be a logical collection of instances 620 that are governed by the same set of security policies applied by the firewall 604. The customer may provide the set of security policies or the computing resource service provider 602 may define a minimum set of security policies. In various embodiments, the customer may create and manage security groups through a management console provided by the computing resource service provider 604. The management console may be exposed to the customers as a webpage, such as the webpage illustrated above in connection with FIG. 3, by interacting with the webpage (e.g., through a browser application) the customer may cause API calls to be generated. The generated API calls may cause the computing resource service provider 604 or component thereof to perform various operations indicated by the customer.

The intrusion detection service 630 may include a collection of devices and/or software applications that monitor network 606 and/or server computer system 646 activity for malicious activities or policy violations. Furthermore, the logging entity 608 or the publishing service 632 may provide the intrusion detection service 630 with network log data 646. Furthermore, the intrusion detection service 630 may correlate network log data 646 across various instances 620 operated by different customers. Correlating the network log data 646 may enable the intrusion detection service 630 to obtain additional information corresponding to an attack or attacker. For example, the log may indicate that a source IP address is scanning a particular network for opened ports. This activity may indicate the source IP address is involved in an attack and the intrusion detection system may cause data packets transmitted from the source IP address to be blocked. In various embodiments, the intrusion detection service 630 generates updates to the set of security polices managed by the security service 636 and provides the updated set of policies to the firewall 604 or other computing devices operated by the computing resource service provider 604. In addition to the intrusion detection service 630, the computing resource service provider may operate an intrusion prevention service (not illustrated in FIG. 6 for simplicity). The intrusion prevention service may include one or more network devices configured to prevent and/or block intrusions that are detected. For example, the intrusion prevention service may send an alarm, drop malicious packets, reset a connection, or block the traffic from the offending IP address. The intrusion prevention system may monitor network traffic by at least obtaining the network log data 646 from the logging entity 608 or the publishing service 632.

The network information service 626 may maintain customer account information and other information corresponding to the customer. For example, the network information service 626 may include customer identification information, instance identification information, network interface identification information, and other information suitable for identifying information associated with a particular customer. For example, as described above, the network log information may include customer identification information. The logging entity 608 or metrics service 634 may obtain the customer identification information from the network information service 626. The publishing service 632 publishes and schedules updates to the network log data 646 to the resources data 644 or other end point designated by the customer. The publishing service 632 may also periodically or aperiodically check if the logging entity 608 has additional log information to be published to one or more end points. In various embodiments, the publishing service 632 may transmit log information real-time or near real-time to the various end points.

The metrics service 634 may receive, from the login entity 608 or other component of the server computer system 642, resource data 644 corresponding to the instances 620. The resource data 644 obtained by the metrics service 634 may indicate the utilization of various components of the instances 620 such as the central processing unit, memory, networking interface, operating system, applications, and other components of the instances 620. This information may be used for a variety of different purposes, for example, determining whether to allocate or deallocate resources to the auto-scaling group 602. Additionally, the information may be used by the maintenance service 632 to determine the health of an instance 620 and/or a server computer system 642. The metrics service 634 may obtain and aggregate utilization information for all of the instances 620 assigned to the auto-scaling group 602. Furthermore, when instances 620 are placed in standby or detached from the auto-scaling group 620, the metrics service 634 may receive a command to remove the instances 620 from the set of instances 620 for which the metrics service 632 collects and/or aggregates utilization information for.

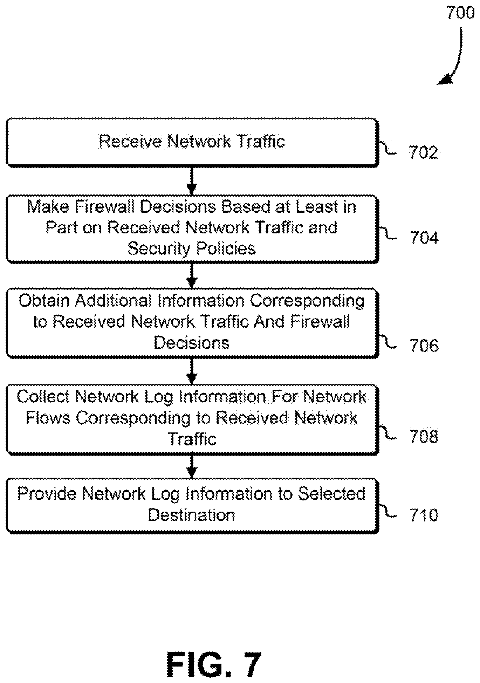

FIG. 7 shows an illustrative process 700 which may be used to provide log information corresponding to a computer system instance in a multi-tenant environment in accordance with at least one embodiment. The process 700 may be performed by any suitable system such as the firewall and logging entity described above in FIGS. 1 and 2 or any combination of systems or component thereof. Returning to FIG. 7, in an embodiment, the process 700 includes receiving network traffic 702. The received network traffic may comprise one or more network flows or transmissions directed to a computer system instance operated by a customer and implemented using computing resources provided by a computing resource service provider. The traffic may be received, as described above, at a server computer system of the computing resource service provider. A firewall of the server computer system may then make a firewall decision based at least in part on the received network traffic and a set of security policies 704. The set of security policies may correspond to a set of network traffic which may be allowed by the firewall on a particular set of ports as described above. The firewall may take an action on the received traffic such as allow or deny.

Returning to FIG. 7, the process 700 may further include obtaining additional information corresponding to the received network traffic and firewall decisions 706. For example, the logging entity may obtain network interface identification information and the particular firewall decision corresponding to a particular network flow or network data packet. The logging entity may then collect network log information for network flows that correspond to the received network traffic. As described above, the network log information may include information obtained from the network data packet such as source address, size, protocol, and any other information included in the network data packet. The logging entity may then provide the network log information to a selected destination 710. The destination may be selected by a customer or may be provided by the computing resource service provider by default or as a result of various options selected by the customer, such as a type of logging or analysis to be provided to the customer. Furthermore, the logging entity may process at least a portion of the network log information before providing the network log information to the selected destination.

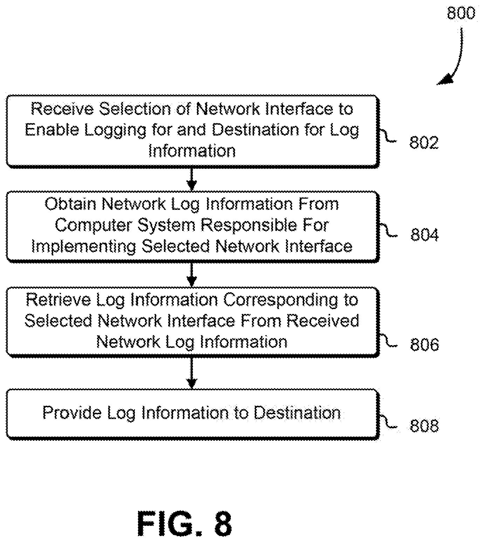

FIG. 8 shows an illustrative process 800 which may be used to provide log information corresponding to a computer system instance in a multi-tenant environment in accordance with at least one embodiment. The process 800 may be performed by any suitable system such as the firewall and logging entity described above in FIG 6 or any combination of systems or component thereof. Returning to FIG. 8, in an embodiment, the process 800 includes receiving a selection of a network interface to enable logging and a destination for the log information 802. As described above, the customer may be using a client computing device to interact with a management console exposed to the customer. Through the management console, the customer may specify a network interface, virtual private network, subnet, computer system instance, or other computing resource provided to the customer to enable logging in.

The management console may then transmit a command to the appropriate computer system or service of the computing resource service provider to cause the computer system to obtain network log information from the computer system responsible for implementing the selected network interface 804. Obtaining the network log information may include receiving from a publishing service log information generated by the server computer system. Furthermore, the log information may include all of the log information for the plurality of customers provided resources by the server computer system in the multi-tenant environment. The log information corresponding to the selected network interface may then be retrieved from the obtain network log information 806. For example, the computing resource service provider may scan the log information for information identifying the selected network interface. The computing resource service provider may then provide the log information to a destination. For example, the publishing service may then transmit the log information to a metrics service which may generate visualization of the log information on behalf of the customer.

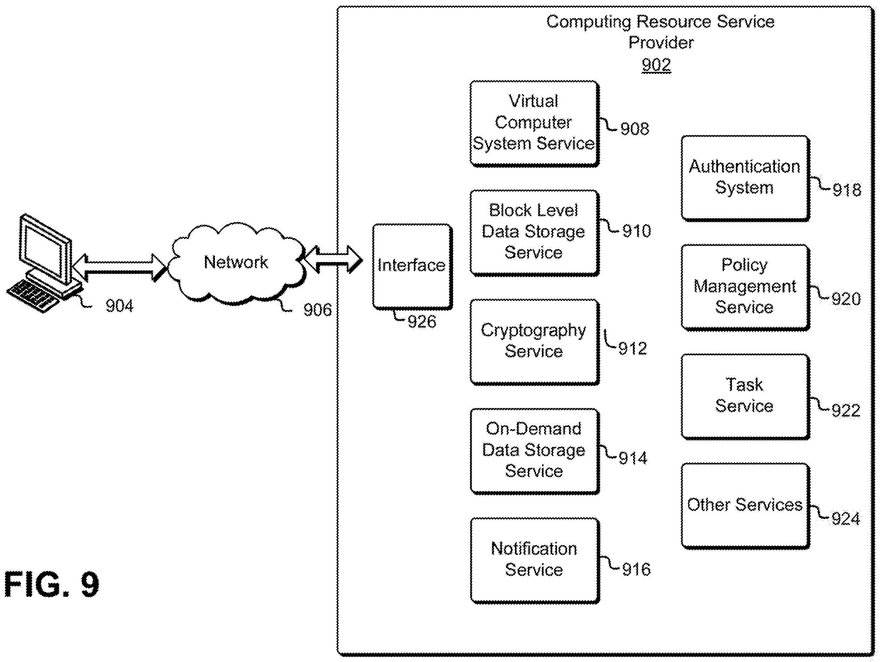

FIG. 9 shows an example of a customer connected to a computing resource service provider in accordance with at least one embodiment. The computing resource service provider 902 may provide a variety of services to the customer 904 and the customer 904 may communicate with the computing resource service provider 902 via an interface 926, which may be a web services interface or any other type of customer interface. The interface 926 may, for instance, be configured to receive API calls from the customer 904 and, to fulfill the API calls, may cause respective services to perform various operations such as described above. Each service of the computing resource service provider 902 may be implemented as a computer system (e.g., a distributed computer system comprising multiple computing devices, each with one or more respective processors, that communicate over a network) that operates according to executable instructions stored collectively on a set of computer-readable storage media, where individual computer-readable storage media may each have a portion of the instructions for causing a respective device of the computer system to operate. In some embodiments, at least some of the services are interoperable, thereby forming a larger distributed computer system made up from individual distributed computer systems each that operates a respective service. While FIG. 8 shows one interface 926 for the services of the computing resource service provider 902, each service may have its own interface and, generally, subsets of the services may have corresponding interfaces in addition to or as an alternative to the interface 926. The customer 904 may be an organization that may utilize one or more of the services provided by the computing resource service provider 902 to maintain and deliver information to its employees, which may be located in various geographical locations. Additionally, the customer 904 may be an individual that utilizes the services of the computing resource service provider 902 to deliver content to a working group located remotely. As shown in FIG. 9, the customer 904 may communicate with the computing resource service provider 902 through a network 906, whereby the network 906 may be a communication network, such as the Internet, an intranet or an Internet service provider (ISP) network. Some communications from the customer 904 to the computing resource service provider 902 may cause the computing resource service provider 902 to operate in accordance with one or more embodiments described or a variation thereof.

The computing resource service provider 902 may provide various computing resource services to its customers. The services provided by the computing resource service provider 902, in this example, include a virtual computer system service 908, a block-level data storage service 910, a cryptography service 912, an on-demand data storage service 914, a notification service 916, an authentication system 918, a policy management service 920, a task service 922 and one or more other services 924. It is noted that not all embodiments described include the services 908-24 described with reference to FIG. 9 and additional services may be provided in addition to or as an alternative to services explicitly described. As described, each of the services 908-24 may include one or more web service interfaces that enable the customer 904 to submit appropriately configured API calls to the various services through web service requests. In addition, each of the services may include one or more service interfaces that enable the services to access each other (e.g., to enable a virtual computer system of the virtual computer system service 908 to store data in or retrieve data from the on-demand data storage service 914 and/or to access one or more block-level data storage devices provided by the block level data storage service 910).

The virtual computer system service 908 may include hardware, software, or combination thereof configured to instantiate virtual machine instances on behalf of the customer 904. The customer 904 may interact with the virtual computer system service 908 (via appropriately configured and authenticated API calls) to provision and operate virtual computer systems that are instantiated on physical computing devices hosted and operated by the computing resource service provider 902. The virtual computer systems may be used for various purposes, such as to operate as servers supporting a website, to operate business applications or, generally, to serve as computing power for the customer. Other applications for the virtual computer systems may be to support database applications, electronic commerce applications, business applications and/or other applications. Although the virtual computer system service 908 is shown in FIG. 8, any other computer system or computer system service may be utilized in the computing resource service provider 902, such as a computer system or computer system service that does not employ virtualization or instantiation and instead provisions computing resources on dedicated or shared computers/servers and/or other physical devices.

The block-level data storage service 910 may comprise one or more computing resources that collectively operate to store data for a customer 904 using block-level storage devices (and/or virtualizations thereof). The block-level storage devices of the block-level data storage service 910 may, for instance, be operationally attached to virtual computer systems provided by the virtual computer system service 908 to serve as logical units (e.g., virtual drives) for the computer systems. A block-level storage device may enable the persistent storage of data used/generated by a corresponding virtual computer system where the virtual computer system service 908 may only provide ephemeral data storage.

The computing resource service provider 902 also includes a cryptography service 912. The cryptography service 912 may utilize one or more storage services of the computing resource service provider 902 to store keys of the customers in encrypted form, whereby the keys may be usable to decrypt customer 912 keys accessible only to particular devices of the cryptography service 912.

The computing resource service provider 902 further includes an on-demand data storage service 914. The on-demand data storage service 914 may include hardware, software, or combination thereof configured to synchronously process requests to store and/or access data. The on-demand data storage service 914 may operate using computing resources (e.g., databases) that enable the on-demand data storage service 914 to locate and retrieve data quickly, to allow data to be provided in responses to requests for the data. For example, the on-demand data storage service 914 may maintain stored data in a manner such that, when a request for a data object is retrieved, the data object can be provided (or streaming of the data object can be initiated) in a response to the request. As noted, data stored in the on-demand data storage service 914 may be organized into data objects. The data objects may have arbitrary sizes except, perhaps, for certain constraints on size. Thus, the on-demand data storage service 914 may store numerous data objects of varying sizes. The on-demand data storage service 914 may operate as a key value store that associates data objects with identifiers of the data objects which may be used by the customer 904 to retrieve or perform other operations in connection with the data objects stored by the on-demand data storage service 914.

In the environment illustrated in FIG. 9, a notification service 916 is included. The notification service 916 may comprise hardware, software, or combination thereof configured to provide a web service or other interface and browser-based management console. The management console can be used to configure topics for which customers seek to receive notifications, configure applications (or people), subscribe clients to the topics, publish messages, or configure delivery of the messages over clients' protocol of choice (i.e., hypertext transfer protocol (HTTP), e-mail and short message service (SMS), among others). The notification service 916 may provide notifications to clients using a "push" mechanism without the need to periodically check or "poll" for new information and updates. The notification service 916 may further be used for various purposes such as monitoring applications executing in the virtual computer system service 908, workflow systems, time-sensitive information updates, mobile applications, and many others.

As illustrated in FIG. 9, the computing resource service provider 902, in various embodiments, includes an authentication system 918 and a policy management service 920. The authentication system 918, in an embodiment, is a computer system (i.e., collection of computing resources) configured to perform operations involved in authentication of users of the customer. For instance, one of the services 908-16 and 920-24 may provide information from a user to the authentication service 918 to receive information in return that indicates whether the user requests are authentic.

The policy management service 920, in an embodiment, is a computer system configured to manage policies on behalf of customers (such as customer 904) of the computing resource service provider 902. The policy management service 920 may include an interface that enables customers to submit requests related to the management of policy. Such requests may, for instance, be requests to add, delete, change or otherwise modify policy for a customer or for other administrative actions, such as providing an inventory of existing policies and the like.

The computing resource service provider 902, in various embodiments, is also equipped with a task service 922. The task service 922 is configured to receive a task package from the customer 904 and enable executing tasks as dictated by the task package. The task service 922 may be configured to use any resource of the computing resource service provider 902, such as one or more instantiated virtual machines or virtual hosts, for executing the task. The task service 924 may configure the one or more instantiated virtual machines or virtual hosts to operate using a selected operating system and/or a selected execution application in accordance with a requirement of the customer 904.

The computing resource service provider 902 additionally maintains one or more other services 924 based at least in part on the needs of its customers 904. For instance, the computing resource service provider 902 may maintain a database service for its customers 904. A database service may hardware software, or combination thereof configured to run one or more databases for one or more customers 904. The customer 904 may operate and manage a database from the database service by utilizing appropriately configured API calls. This, in turn, may allow a customer 904 to maintain and potentially scale the operations in the database. Other services include, but are not limited to, object-level archival data storage services, services that manage and/or monitor other services.

Embodiments of the present disclosure can be described in view of the following clauses:
1. A computer-implemented method, comprising:
   under the control of one or more computer systems configured with executable instructions,
   receive a request from a customer of a computing resource service provider to enable logging for a virtual computer system instance, the virtual computer system instance hosted by the computing resources service provider;
   filter, by a firewall, network traffic directed to the virtual computer system instance based at least in part on one or more security policies maintained by the customer;
   obtain network traffic log information and firewall decisions from the firewall;
   retrieve network log information corresponding to the virtual computer system instance operated by the customer; and
   provide the retrieved network log information to a destination, accessible to the customer, indicated by the customer in the received request.
2. The computer-implemented method of clause 1, wherein the destination comprises a metrics service of the computing resource service provider, where the metrics service configured to provide the customer with metrics information corresponding to the virtual computer system instance hosted by the computing resource service provider for use by the customer.
3. The computer-implemented method of clause 2, wherein the metrics service is further configured to generate a visualization of network traffic associated with the virtual computer system instance based at least in part on the provided network log information.
4. The computer-implemented method of any of clauses 1-3, wherein the destination comprises a storage service of the computing resource service provider, where the storage service is configured to persistently store the network log information such that the network log information is accessible to the customer.
5. A system, comprising: a set of computer systems that is configured to:
   receive a request from a customer of a computing resource service provider to enable logging for a virtual computer system instance supported by computing resources of the system and programmatically managed by the customer;
   receive one or more data packets at a network interface of the system, where the one or more data packets are associated with a set of network flows directed to the virtual computer system instance;
   filter the one or more data packets at a firewall based at least in part on one or more security policies, where the one or more security policies indicate whether to allow or deny a particular data packet based at least in part on information contained in the data packet;
   as a result of fulfillment of the received request causing logging to be enabled, obtain log information corresponding to the filtering of the one or more data packets and a set of actions performed by the firewall in filtering the one or more data packets; and
   provide the log information to a destination accessible to the customer.
6. The system of clause 5, wherein the destination further comprises an intrusion prevention system configured to apply the one or more security policies.
7. The system of clause 6, wherein the intrusion prevention system is further configured to update the one or more security policies based at least in part on the provided log information.
8. The system of clause 7, wherein the intrusion prevention system is further configured to provide the update to the one or more security policies to the firewall.
9. The system of any of clauses 5-8, wherein the memory further includes instructions that, when executed by the one or more processors, cause the system to provide a notification to the customer based at least in part on an alarm set by the customer with the metrics service.
10. The system of any of clauses 5-9, wherein the memory further includes instructions that, when executed by the one or more processors, cause the system to filter the obtained log information based at least in part on one or more attributes of the log information as a result of receive, from the customer associated with the virtual computer system instance, a request to filter the obtained log information.
11. The system of any of clauses 5-10, wherein the memory further includes instructions that, when executed by the one or more processors, cause the system to disable logging for the virtual computer system instance based at least in part on receiving, from the customer associated with the virtual computer system instance, an API call to terminate logging of the virtual computer system instance.
12. The system of any of clauses 5-11, wherein the memory further includes instructions that, when executed by the one or more processors, cause the system to provide the log information to another destination based at least in part on receiving, from the customer associated with the virtual computer system instance, an API call indicating the other destination.
13. A set of non-transitory computer-readable storage media having collectively stored thereon executable instructions that, when executed by one or more processors of a set of computer systems, cause at least a subset of the set of computer systems to at least:
   fulfill a request from a customer of a computing resource service provider to enable logging for a virtual computer system instance supported by computing resources hosted by a computing resource service provider;
   filter network traffic at a firewall, at least a portion of the network traffic directed to a set of computing resources used at least in part to support the virtual computer system instance managed by the customer based at least in part on one or more security policies;
   as a result of fulfillment of the received request, obtain, from the firewall, network traffic log information;
   retrieve, from the obtained network log information, log information corresponding to the virtual computer system instance; and
   provide the retrieved log information to a storage service for persistent storage.
14. The non-transitory computer-readable storage medium of clause 13, wherein the instructions that cause the computer system to receive a request from a customer of a computing resource service provider to enable logging further include instructions that cause the computer system to enable logging for the set of computing resources based at least in part on receiving a command from a management console exposed to the customer, where the management console receives a selection of the virtual computer system instance managed by the customer to enable logging for.
15. The non-transitory computer-readable storage medium of clauses 13 or 14, wherein the instructions further comprise instructions that, when executed by the one or more processors, cause the computer system to provide the retrieved log information to a metrics service.
16. The non-transitory computer-readable storage medium of any of clauses 13-15, wherein the instructions further comprise instructions that, when executed by the one or more processors, cause the computer system to generate a set of visualization indicating one or more attributes of the portion of the network traffic directed to the virtual computer system instance based at least in part on the retrieved log information.
17. The non-transitory computer-readable storage medium of any of clauses 13-16, wherein the instructions that cause the computer system to retrieve log information corresponding to the set of computing resources further include instructions that cause the computer system to retrieve log information for a set of virtual computer system instances managed by the customer, where at least a portion of the set of virtual computer system instances are supported by the set of computing resources and the virtual computer system instance is a member of the set of virtual computer system instances.
18. The non-transitory computer-readable storage medium of any of clauses 13-17, wherein the instructions further comprise instructions that, when executed by the one or more processors, cause the computer system to provide the retrieved log information to a third party service provider not responsible for the computer system.
19. The non-transitory computer-readable storage medium of any of clauses 13-18, wherein the instructions further comprise instructions that, when executed by the one or more processors, cause the computer system to:
   retrieve additional network log information corresponding to a second set of computing resources hosted by the computing resource service provider and used to support a second virtual computer system instance managed by a second customer; and
   wherein providing the retrieved network log information to the storage service for persistent storage further includes providing the additional network log information to the storage service for persistent storage.
20. The non-transitory computer-readable storage medium of any of clauses 13-19, wherein the instructions further comprise instructions that, when executed by the one or more processors, cause the computer system to disable logging for the virtual computer system instance based at least in part on receiving a command from the customer to disable logging.

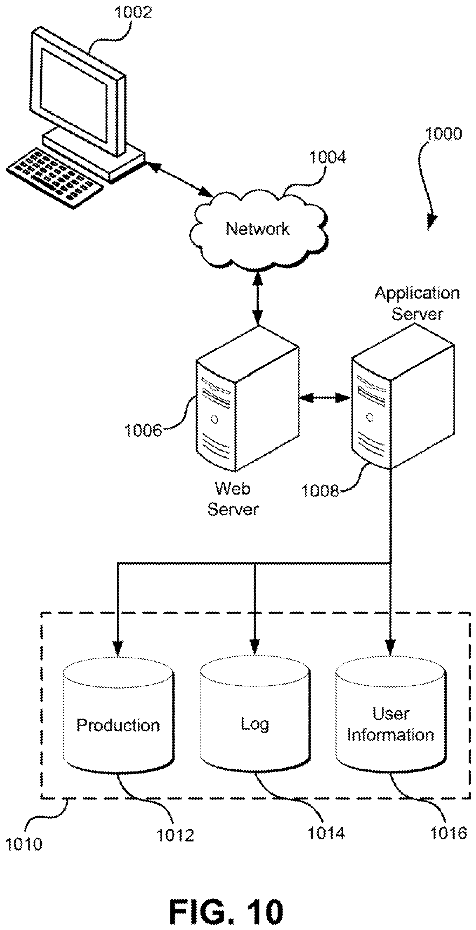

FIG. 10 illustrates aspects of an example environment 1000 for implementing aspects in accordance with various embodiments. As will be appreciated, although a web-based environment is used for purposes of explanation, different environments may be used, as appropriate, to implement various embodiments. The environment includes an electronic client device 1002, which can include any appropriate device operable to send and/or receive requests, messages or information over an appropriate network 1004 and, in some embodiments, convey information back to a user of the device. Examples of such client devices include personal computers, cell phones, handheld messaging devices, laptop computers, tablet computers, set-top boxes, personal data assistants, embedded computer systems, electronic book readers and the like. The network can include any appropriate network, including an intranet, the Internet, a cellular network, a local area network, a satellite network or any other such network and/or combination thereof. Components used for such a system can depend at least in part upon the type of network and/or environment selected. Protocols and components for communicating via such a network are well known and will not be discussed herein in detail. Communication over the network can be enabled by wired or wireless connections and combinations thereof. In this example, the network includes the Internet, as the environment includes a web server 1006 for receiving requests and serving content in response thereto, although for other networks an alternative device serving a similar purpose could be used as would be apparent to one of ordinary skill in the art.

The illustrative environment includes at least one application server 1008 and a data store 1010. It should be understood that there can be several application servers, layers or other elements, processes or components, which may be chained or otherwise configured, which can interact to perform tasks such as obtaining data from an appropriate data store. Servers, as used herein, may be implemented in various ways, such as hardware devices or virtual computer systems. In some contexts, servers may refer to a programming module being executed on a computer system. As used herein, unless otherwise stated or clear from context, the term "data store" refers to any device or combination of devices capable of storing, accessing and retrieving data, which may include any combination and number of data servers, databases, data storage devices and data storage media, in any standard, distributed, virtual or clustered environment. The application server can include any appropriate hardware, software and firmware for integrating with the data store as needed to execute aspects of one or more applications for the client device, handling some or all of the data access and business logic for an application. The application server may provide access control services in cooperation with the data store and is able to generate content including, but not limited to, text, graphics, audio, video and/or other content usable to be provided to the user, which may be served to the user by the web server in the form of HyperText Markup Language ("HTML"), Extensible Markup Language ("XML"), JavaScript, Cascading Style Sheets ("CSS") or another appropriate client-side structured language. Content transferred to a client device may be processed by the client device to provide the content in one or more forms including, but not limited to, forms that are perceptible to the user audibly, visually and/or through other senses including touch, taste, and/or smell. The handling of all requests and responses, as well as the delivery of content between the client device 1002 and the application server 1008, can be handled by the web server using PHP: Hypertext Preprocessor ("PHP"), Python, Ruby, Perl, Java, HTML, XML or another appropriate server-side structured language in this example. It should be understood that the web and application servers are not required and are merely example components, as structured code discussed herein can be executed on any appropriate device or host machine as discussed elsewhere herein. Further, operations described herein as being performed by a single device may, unless otherwise clear from context, be performed collectively by multiple devices, which may form a distributed and/or virtual system.

The data store 1010 can include several separate data tables, databases, data documents, dynamic data storage schemes and/or other data storage mechanisms and media for storing data relating to a particular aspect of the present disclosure. For example, the data store illustrated may include mechanisms for storing production data 1012 and user information 1016, which can be used to serve content for the production side. The data store also is shown to include a mechanism for storing log data 1014, which can be used for reporting, analysis or other such purposes. It should be understood that there can be many other aspects that may need to be stored in the data store, such as page image information and access rights information, which can be stored in any of the above listed mechanisms as appropriate or in additional mechanisms in the data store 1010. The data store 1010 is operable, through logic associated therewith, to receive instructions from the application server 1008 and obtain, update or otherwise process data in response thereto. The application server 1008 may provide static, dynamic or a combination of static and dynamic data in response to the received instructions. Dynamic data, such as data used in web logs (blogs), shopping applications, news services and other such applications may be generated by server-side structured languages as described herein or may be provided by a content management system ("CMS") operating on, or under the control of, the application server. In one example, a user, through a device operated by the user, might submit a search request for a certain type of item. In this case, the data store might access the user information to verify the identity of the user and can access the catalog detail information to obtain information about items of that type. The information then can be returned to the user, such as in a results listing on a web page that the user is able to view via a browser on the user device 1002. Information for a particular item of interest can be viewed in a dedicated page or window of the browser. It should be noted, however, that embodiments of the present disclosure are not necessarily limited to the context of web pages, but may be more generally applicable to processing requests in general, where the requests are not necessarily requests for content.

Each server typically will include an operating system that provides executable program instructions for the general administration and operation of that server and typically will include a computer-readable storage medium (e.g., a hard disk, random access memory, read only memory, etc.) storing instructions that, when executed by a processor of the server, allow the server to perform its intended functions. Suitable implementations for the operating system and general functionality of the servers are known or commercially available and are readily implemented by persons having ordinary skill in the art, particularly in light of the disclosure herein.

The environment, in one embodiment, is a distributed and/or virtual computing environment utilizing several computer systems and components that are interconnected via communication links, using one or more computer networks or direct connections. However, it will be appreciated by those of ordinary skill in the art that such a system could operate equally well in a system having fewer or a greater number of components than are illustrated in FIG. 10. Thus, the depiction of the system 1000 in FIG. 10 should be taken as being illustrative in nature and not limiting to the scope of the disclosure.

The various embodiments further can be implemented in a wide variety of operating environments, which in some cases can include one or more user computers, computing devices or processing devices which can be used to operate any of a number of applications. User or client devices can include any of a number of general purpose personal computers, such as desktop, laptop or tablet computers running a standard operating system, as well as cellular, wireless and handheld devices running mobile software and capable of supporting a number of networking and messaging protocols. Such a system also can include a number of workstations running any of a variety of commercially-available operating systems and other known applications for purposes such as development and database management. These devices also can include other electronic devices, such as dummy terminals, thin-clients, gaming systems and other devices capable of communicating via a network. These devices also can include virtual devices such as virtual machines, hypervisors and other virtual devices capable of communicating via a network.

Various embodiments of the present disclosure utilize at least one network that would be familiar to those skilled in the art for supporting communications using any of a variety of commercially-available protocols, such as Transmission Control Protocol/Internet Protocol ("TCP/IP"), User Datagram Protocol ("UDP"), protocols operating in various layers of the Open System Interconnection ("OSI") model, File Transfer Protocol ("FTP"), Universal Plug and Play ("UpnP"), Network File System ("NFS"), Common Internet File System ("CIFS") and AppleTalk. The network can be, for example, a local area network, a wide-area network, a virtual private network, the Internet, an intranet, an extranet, a public switched telephone network, an infrared network, a wireless network, a satellite network and any combination thereof.

In embodiments utilizing a web server, the web server can run any of a variety of server or mid-tier applications, including Hypertext Transfer Protocol ("HTTP") servers, FTP servers, Common Gateway Interface ("CGI") servers, data servers, Java servers, Apache servers and business application servers. The server(s) also may be capable of executing programs or scripts in response to requests from user devices, such as by executing one or more web applications that may be implemented as one or more scripts or programs written in any programming language, such as Java®, C, C# or C++, or any scripting language, such as Ruby, PHP, Perl, Python or TCL, as well as combinations thereof. The server(s) may also include database servers, including without limitation those commercially available from Oracle®, Microsoft®, Sybase® and IBM® as well as open-source servers such as MySQL, Postgres, SQLite, MongoDB, and any other server capable of storing, retrieving and accessing structured or unstructured data. Database servers may include table-based servers, document-based servers, unstructured servers, relational servers, non-relational servers or combinations of these and/or other database servers.

The environment can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network ("SAN") familiar to those skilled in the art. Similarly, any necessary files for performing the functions attributed to the computers, servers or other network devices may be stored locally and/or remotely, as appropriate. Where a system includes computerized devices, each such device can include hardware elements that may be electrically coupled via a bus, the elements including, for example, at least one central processing unit ("CPU" or "processor"), at least one input device (e.g., a mouse, keyboard, controller, touch screen or keypad) and at least one output device (e.g., a display device, printer or speaker). Such a system may also include one or more storage devices, such as disk drives, optical storage devices and solid-state storage devices such as random access memory ("RAM") or read-only memory ("ROM"), as well as removable media devices, memory cards, flash cards, etc.

Such devices also can include a computer-readable storage media reader, a communications device (e.g., a modem, a network card (wireless or wired), an infrared communication device, etc.) and working memory as described above. The computer-readable storage media reader can be connected with, or configured to receive, a computer-readable storage medium, representing remote, local, fixed and/or removable storage devices as well as storage media for temporarily and/or more permanently containing, storing, transmitting and retrieving computer-readable information. The system and various devices also typically will include a number of software applications, modules, services or other elements located within at least one working memory device, including an operating system and application programs, such as a client application or web browser. It should be appreciated that alternate embodiments may have numerous variations from that described above. For example, customized hardware might also be used and/or particular elements might be implemented in hardware, software (including portable software, such as applets) or both. Further, connection to other computing devices such as network input/output devices may be employed.

Storage media and computer readable media for containing code, or portions of code, can include any appropriate media known or used in the art, including storage media and communication media, such as, but not limited to, volatile and non-volatile, removable and non-removable media implemented in any method or technology for storage and/or transmission of information such as computer readable instructions, data structures, program modules or other data, including RAM, ROM, Electrically Erasable Programmable Read-Only Memory ("EEPROM"), flash memory or other memory technology, Compact Disc Read-Only Memory ("CD-ROM"), digital versatile disk (DVD) or other optical storage, magnetic cassettes, magnetic tape, magnetic disk storage or other magnetic storage devices or any other medium which can be used to store the desired information and which can be accessed by the system device. Based on the disclosure and teachings provided herein, a person of ordinary skill in the art will appreciate other ways and/or methods to implement the various embodiments.

The specification and drawings are, accordingly, to be regarded in an illustrative rather than a restrictive sense. It will, however, be evident that various modifications and changes may be made thereunto without departing from the broader spirit and scope of the invention as set forth in the claims.

Other variations are within the spirit of the present disclosure. Thus, while the disclosed techniques are susceptible to various modifications and alternative constructions, certain illustrated embodiments thereof are shown in the drawings and have been described above in detail. It should be understood, however, that there is no intention to limit the invention to the specific form or forms disclosed, but on the contrary, the intention is to cover all modifications, alternative constructions and equivalents falling within the spirit and scope of the invention, as defined in the appended claims.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including" and "containing" are to be construed as open-ended terms (i.e., meaning "including, but not limited to,") unless otherwise noted. The term "connected," when unmodified and referring to physical connections, is to be construed as partly or wholly contained within, attached to or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. The use of the term "set" (e.g., "a set of items") or "subset" unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but the subset and the corresponding set may be equal.

Conjunctive language, such as phrases of the form "at least one of A, B, and C," or "at least one of A, B and C," unless specifically stated otherwise or otherwise clearly contradicted by context, is otherwise understood with the context as used in general to present that an item, term, etc., may be either A or B or C, or any nonempty subset of the set of A and B and C. For instance, in the illustrative example of a set having three members, the conjunctive phrases "at least one of A, B, and C" and "at least one of A, B and C" refer to any of the following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present.

Operations of processes described herein can be performed in any suitable order unless otherwise indicated herein or otherwise clearly contradicted by context. Processes described herein (or variations and/or combinations thereof) may be performed under the control of one or more computer systems configured with executable instructions and may be implemented as code (e.g., executable instructions, one or more computer programs or one or more applications) executing collectively on one or more processors, by hardware or combinations thereof. The code may be stored on a computer-readable storage medium, for example, in the form of a computer program comprising a plurality of instructions executable by one or more processors. The computer-readable storage medium may be non-transitory.

The use of any and all examples, or exemplary language (e.g., "such as") provided herein, is intended merely to better illuminate embodiments of the invention and does not pose a limitation on the scope of the invention unless otherwise claimed. No language in the specification should be construed as indicating any non-claimed element as essential to the practice of the invention.

Embodiments of this disclosure are described herein, including the best mode known to the inventors for carrying out the invention. Variations of those embodiments may become apparent to those of ordinary skill in the art upon reading the foregoing description. The inventors expect skilled artisans to employ such variations as appropriate and the inventors intend for embodiments of the present disclosure to be practiced otherwise than as specifically described herein. Accordingly, the scope of the present disclosure includes all modifications and equivalents of the subject matter recited in the claims appended hereto as permitted by applicable law. Moreover, any combination of the above-described elements in all possible variations thereof is encompassed by the scope of the present disclosure unless otherwise indicated herein or otherwise clearly contradicted by context.

All references, including publications, patent applications and patents, cited herein are hereby incorporated by reference to the same extent as if each reference were individually and specifically indicated to be incorporated by reference and were set forth in its entirety herein.

A data center is a facility that houses computer systems and various networking, storage, and other related components. Data centers may, for example, provide computing services to businesses and individuals as a remote computing service or to provide "software as a service" (e.g., cloud computing). To facilitate utilization of data center resources, virtualization technologies may allow a single physical computing machine to host one or more instances of virtual machines that appear and operate as independent computer machines to a connected computer user. With virtualization, the single physical computing device can create, maintain, or delete virtual machines in a dynamic manner.

Customers of data centers may be provided a wide range of choices with regard to the resources that are selected and how the resources are set up and utilized. Depending on how the resources are set up and utilized, customers may experience different levels of performance for their resources.

Throughout the drawings, reference numbers may be reused to indicate correspondence between referenced elements. The drawings are provided to illustrate example embodiments described herein and are not intended to limit the scope of the disclosure.

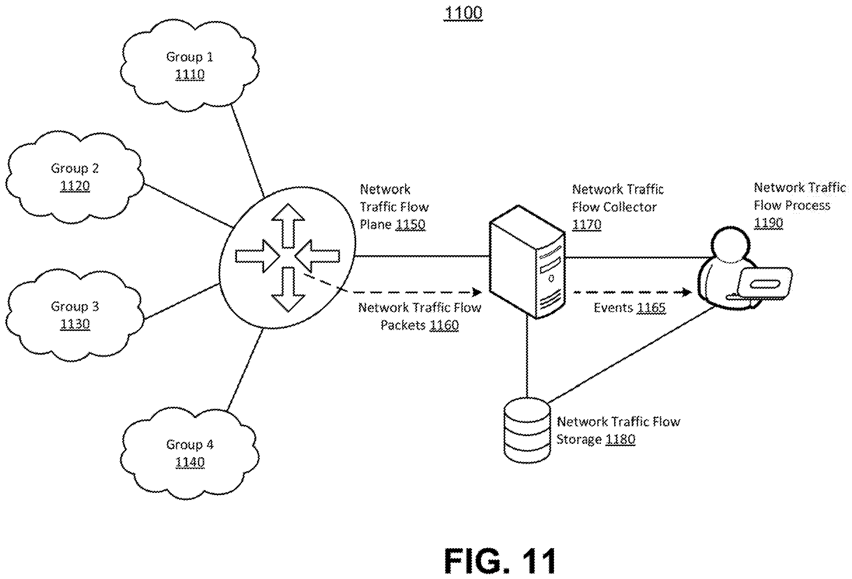

FIG. 11 is a diagram illustrating a mechanism for event-driven processing of network traffic flow information in accordance with the present disclosure;

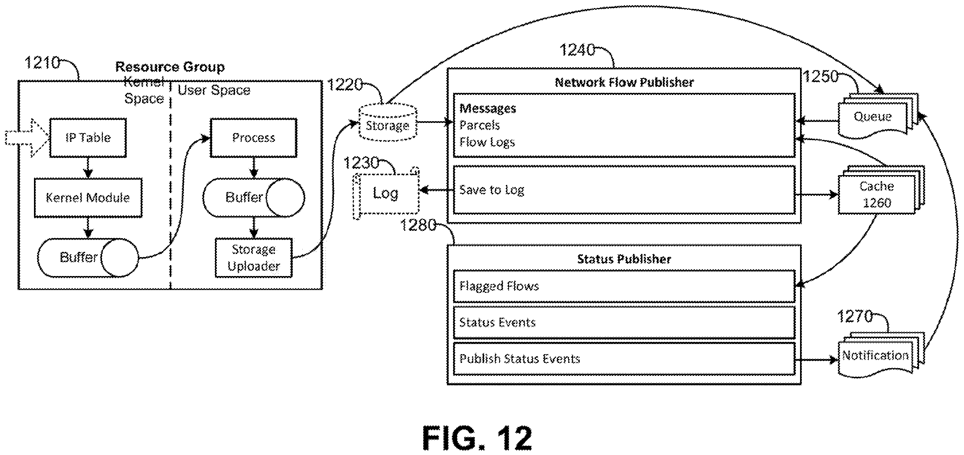

FIG. 12 is a diagram illustrating a mechanism for event-driven processing of network traffic flow information in accordance with the present disclosure;

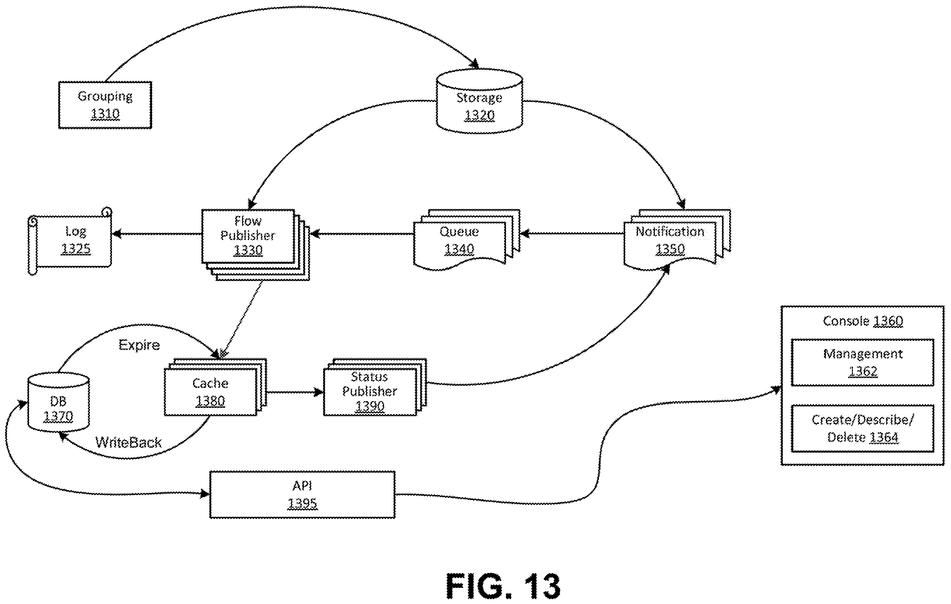

FIG. 13 is a diagram illustrating a mechanism for event-driven processing of network traffic flow information in accordance with the present disclosure;

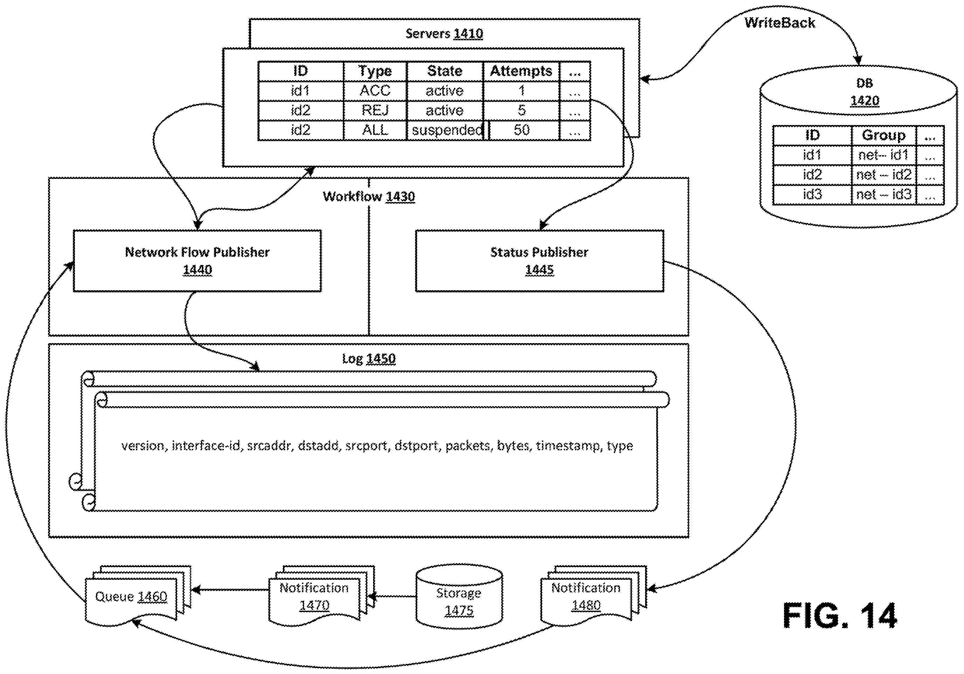

FIG. 14 is a diagram illustrating a mechanism for event-driven processing of network traffic flow information in accordance with the present disclosure;

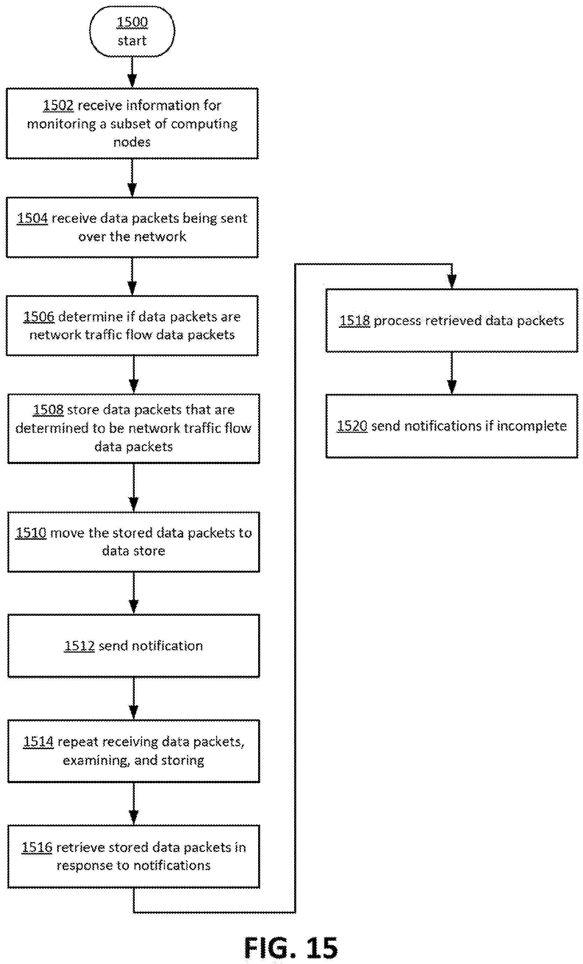

FIG. 15 is a flowchart depicting an example procedure for event-driven processing of network traffic flow information in accordance with the present disclosure;

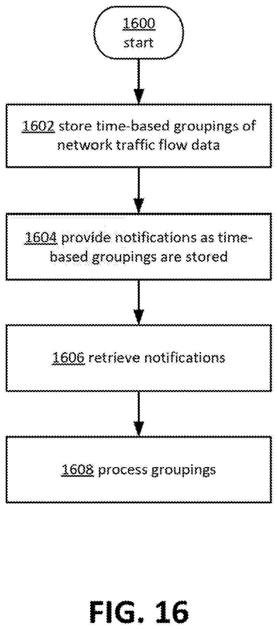

FIG. 16 is a flowchart depicting an example procedure for event-driven processing of network traffic flow information in accordance with the present disclosure;

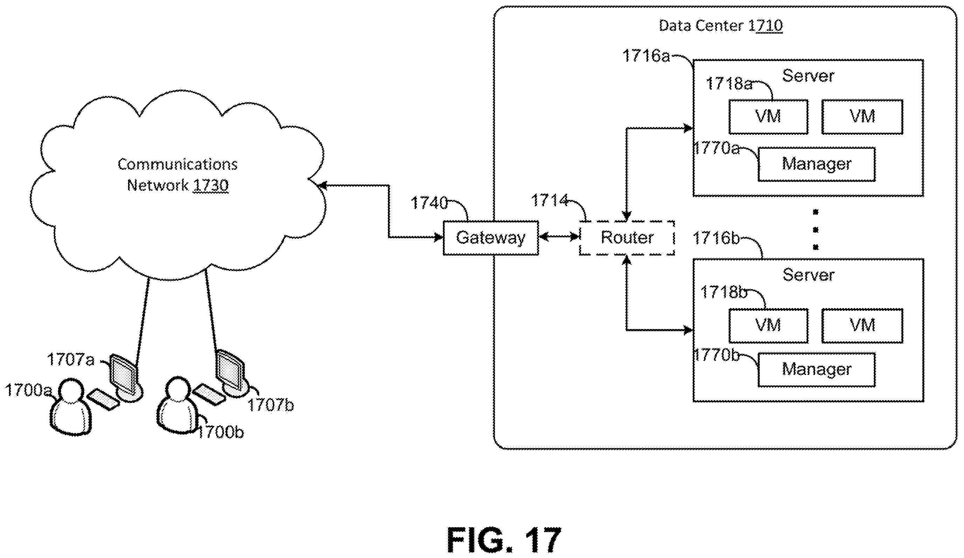

FIG. 17 is a diagram illustrating an example computer environment that may be used in some embodiments;

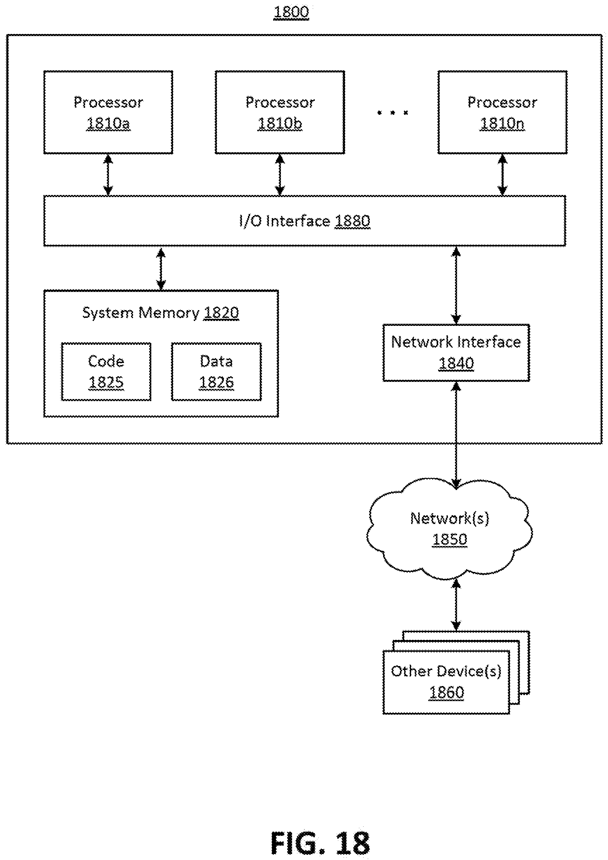

FIG. 18 is a diagram illustrating an example computer system that may be used in some embodiments; and

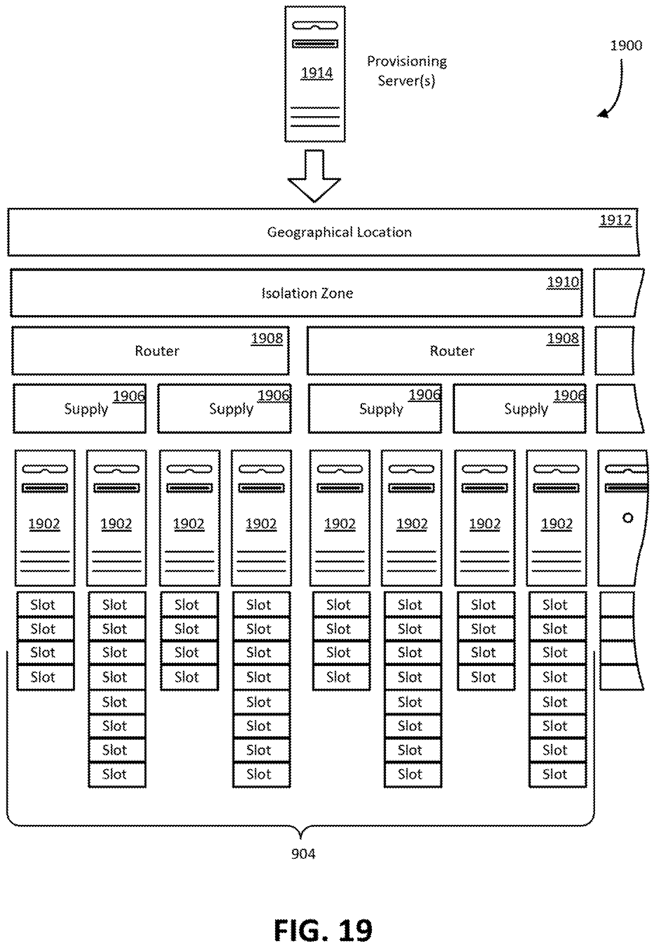

FIG. 19 is a diagram illustrating an example computer environment that may be used in some embodiments.

Embodiments of systems and methods are described for providing access to data in a provider network. For defined units or subsets of computing resources of the provider network, network data flows are captured and stored for selected units of time and during selected time intervals. Event notifications are generated when network data flows for a unit of time are stored and available for processing. In response to one of these events, the provider network may process the stored data for the unit of time and make selected parts of the network data flow data available for requesting customers. As additional network data flows are captured and stored for additional units of time, the event notifications are sent to a queue. The stored data is processed based on the event notifications retrieved from the queue. If a set of stored data cannot be processed or if there is a delay in processing, then the event notifications for that set of stored data can be returned to the queue for processing at a subsequent time.

A service provider, such as an entity that operates a provider network, may offer computing resources such as computing instances and storage resources to customers (who may also be referred to as entities or users). A customer may be any person or entity who accesses computing resources of a service provider. The service provider may, for example, provide a web services platform. Multiple customers may access the web services platform via a computing node and issue instructions to the web services platform. The web services platform may be also be referred to as a multi-tenant web services platform to denote that multiple customers may access the platform. The web services platform may respond to instructions by performing computing operations on one or more of a plurality of computing nodes that make up the web services platform.

Other types of resources may be offered by the provider network. For example, the provider network may provide monitoring and assessment of a customer's instances and other resources and applications running on the resources. Such monitoring and assessment services may generally be referred to herein as resource analysis services. The monitored and assessed information may be useful for collecting and tracking various metrics and providing recommendations regarding system and network architecture, resource utilization, application performance, and operational health of the resources associated with customers. Such information may be useful for keeping instances and applications operating smoothly and efficiently. This information may be analyzed to determine if the customer's resources and their configurations are optimized for their intended use.

Such computing environments are large and complex and include a vast number of interconnected devices with a mix of various types of data flowing through both virtual and physical components. The various computing devices, such as servers and routers, may have complex interactions, and behaviors in one area can affect the performance of the entire computing environment. In many cases, customers may have hundreds or thousands of instances, and it may be difficult for a customer to ascertain how to assess the customer's configuration and architecture and how various metrics may be impacted by network configuration and architecture decisions.

In many cases, customers of the provider network may be interested in network traffic flow information. The provider network may, for example, collect IP network traffic as data enters or exits a selected interface of a defined network boundary. The network traffic flow information may be useful to analyze network traffic flow and volume to determine sources and destinations of data traffic as well as the volume of data traffic being generated. The provider network may execute one or more functions to collect IP traffic statistics on selected interfaces and store the data for network traffic analysis. Network traffic flow information can include data packets that include the ingress interface, source IP address, destination IP address, source port, destination port, and egress interface.

The amount of network traffic flow information that is generated for a given set of computing resources can be significant. For example, for a given droplet or other defined unit of computing capacity, the provider network may want to filter out unwanted data flows and identify flows requested by the customers. Because of the significant volume of data and the amount of processing for providing the requested flows, the stored network traffic flow information may not be processed in time to keep up with the data as it is collected, especially using a polling approach where the processing component continuously polls to determine if captured network traffic flow information is available to be processed.

The present disclosure describes systems and methods for an event-driven approach to processing network traffic flow information that avoids polling and allows for processing of captured network traffic flow information without loss of data and information. By using an event-driven approach, the systems responsible for processing the network traffic flow information can be notified when stored network traffic flow information is available to be processed. A number of notifications can be provided for a succession of groupings of network traffic flow information so that the processing workflows can process the groupings of network traffic flow information in a queued fashion. If an issue or problem arises that prevents processing of a grouping of network traffic flow information, then that grouping can be dropped and processing can continue with the next grouping. Dropped groupings may be revisited at a later time for additional processing attempts to ensure that all captured data is processed.

In some embodiments, the processing workflow can access the queue of notifications to determine if any dropped groupings need to be processed. Alternatively, the processing workflow can analyze stored information to determine if any dropped groupings need to be processed. Use of event-driven processing of network traffic flow information can thus allow for more complete processing of network traffic flow information in a computing environment with significant computing resources without loss or dropping of data, and allows for the processing workflows to process the data as fast as practicable under current conditions of the computing environment.

In some embodiments, the processed network traffic flow information may be provided to requesting customers, who may access the network traffic flow information relevant to their allocated computing resources. The described event-driven process can be useful in cases where a customer sets up a security rule or other configurations incorrectly, preventing the processing workflows to complete data publishing tasks for the customer. Such incomplete events may be queued for repeated attempts at a later time, thus providing the possibility of fulfilling the customer's data request without loss.

In some embodiments, a grouping of data may be referred to as a parcel or bucket of data, which may include network traffic flow information for a discrete defined set of computing resources such as a droplet in a virtualized computing environment. In such a scenario, a parcel or bucket of data for a droplet may include network traffic flow information collected for a ten minute period, for example. The network traffic flow information may be collected at defined time intervals (e.g., every minute).

FIG. 11 is a diagram illustrating an example system for providing event-driven processing of network traffic flow information accordance with the present disclosure. In FIG. 11, system 1100 for providing computing resources is described according to an embodiment. System 1100 may be implemented, for example, in one or more data centers as described herein. System 1100 may include groups of computing resources that may include a number of virtual and physical resources. For example, computing instances may be configured to provide virtual computing services to a computer user of a public network via a gateway. For example, virtual computing services may provide a set of remote access enterprise applications to a group of users who may, for example, be employees of an enterprise customer. It will be appreciated that some embodiments may involve additional resources that are not illustrated in the figure.

FIG. 11 also illustrates network traffic flow plane 1150 and network traffic flow packets 1160. Network traffic flow collector 1170 may facilitate the storage of the network traffic flow packets 1160 in network traffic flow storage 1180. When a determined time period has lapsed, or when some other indication of measurement has occurred, events 1165 may be sent to network traffic flow process 1190.

FIG. 12 is a diagram illustrating one example system for providing event-driven processing of network traffic flow information according to one embodiment. FIG. 12 illustrates a resource group 1210 that is subject to monitoring and capturing of network traffic flow information. In one embodiment, data traffic for the resource group may be processed by components and applications running in kernel space and user space. For example, rules for the treatment of packet may be implemented by a kernel module and packets may be stored in a buffer. Applications running in user space may process the stored packets and the processes packets may be placed in a buffer for uploading to a storage 1220. FIG. 12 also illustrates network flow publisher 1240 that is configured to receive events from queue 1250 that have been provided by status publisher 1280 indicating that data is available for processing. The network flow publisher 1240 accesses parcels from storage 1220 for processing in storage 1220. In an embodiment, storage 1220 may be configured to send events indicating that data is available for processing. The network flow publisher 1240 also accesses customer information to determine which customers have enabled publication of network traffic flow information. In one embodiment, the network flow publisher 1240 may be configured to retrieve data from cache 1260 to determine which information has been requested by customers, determine which information is requested by customers, parse the data in the parcel according to customers and customers' information, identify specific data that matches customers' requests, and store the identified data in log 1230.

FIG. 13 is a diagram illustrating the data flows in an example system for providing event-driven processing of network traffic flow information according to one embodiment. FIG. 13 illustrates that data from a grouping 1310 of resources is stored in a storage 1320. At a selected notification point or other criterion, an event is sent to notification engine 1350. Notification engine 1350 sends a notification to queue 1340 that storage 1320 may be accessed for stored network traffic flow information. Flow publisher 1330 may be configured to access queue 1340 and access log 1325 for recording tags for network traffic flow information. FIG. 13 also illustrates flow publisher 1330 and network status publisher 1390 that receive information from cache 1380 regarding customer configuration information that is stored in database 1370. The customer configuration information may be received as information from an application programming interface (API) 1395 that exposes an interface to console 1360 that includes a management component 1362 and a create/describe/delete component 1364.

FIG. 14 is a diagram adding further detail to the example system for providing event-driven processing of network traffic flow information according to one embodiment. FIG. 14 illustrates example data records stored in servers 1410 for customer configuration and requests that are stored in database 1420. The data records may include identifiers for the records, a type that indicates whether accepted traffic, rejected traffic, or all traffic should be flagged, the state of a request (e.g., active or suspended), number of attempts, and other information if implemented. The data records are available to workflow 1430, which includes network flow publisher 1440 that is configured to maintain log 1450. The network traffic flow data stored in log 1450 may include version, interface identifier, source address, destination address, source port, destination port, packets, bytes, timestamp, and type of traffic Workflow 1430 also includes status publisher 1445 for providing notifications 1480. Notifications 1470 may be generated by storage 1475 as buckets or parcels of network traffic flow data are stored in storage 1475.

In an example use case, the described system for providing event-driven processing of network traffic flow information may be used to expose network traffic being accepted and/or rejected for the requesting customers via system monitoring logs. For example, the system for providing event-driven processing of network traffic flow information may employ an IP address table and generate log data on packets that have been accepted or rejected. The system may capture these packets at a defined time interval and send the packets to a storage bucket or parcel at a larger time interval for further processing. An aggregation workflow, such as network flow publisher 1440 of FIG. 14, may filter out unwanted log data and select and transmit the relevant traffic information. The aggregation workflow may extract the customer-specified traffic type(s) from the parcels for a virtual private cloud, a subnet, or some other defined unit of computing and/or network capacity.

The network flow publisher 1440 may be configured to be triggered by event notifications such as notifications 1470 of FIG. 14. Upon receiving a notification event, network flow publisher 1440 may access the associated network traffic flow information parcel from storage and generate a log such as log 1450 of FIG. 14 for the parcel. The log may be provided to a monitoring and reporting function via an application programming interface (API) such as API 1395 of FIG. 13 if the customer associated with the network traffic flow information has enabled publication of the flow log, the publishing permissions are correctly configured, and other restrictions are not active. If there is no network traffic flow information for a given parcel, then network flow publisher 1440 may provide an indication that there is no traffic information to report.

FIG. 15 illustrates an example operational procedure for providing access to data in a provider network configured to provide virtualized computing services implemented on networked computing resources to customers of a provider network. In an embodiment, event-driven processing of network traffic flow information is implemented by the operations illustrated in FIG. 15, which begins with operation 1500 to start the operational procedure. The procedure can be implemented for a plurality of computing nodes communicating over a network. A computing node can comprise a plurality of virtual machines. Operation 1500 may be followed by operation 1502. Operation 1502 illustrates receiving information for monitoring a subset of the computing nodes. The subset may be defined, for example, based on customers of the provider network who have requested access to network traffic flow information for their allocated computing resources. The subset may also be defined by the provider network as computing nodes that are to be monitored for network traffic flow information for subsequent analysis.

Operation 1502 may be followed by operation 1504. Operation 1504 illustrates receiving data packets being sent over the network. In some embodiments, data packets in the network control plane are received. In other embodiments, data packets being transmitted across the network are received. Operation 1504 may be followed by operation 1506. Operation 1506 illustrates examining the data packets to determine if the data packets are network traffic flow data packets entering or exiting one of the subset of computing nodes. Operation 1506 may be followed by operation 1508, which illustrates storing data packets that are determined to be network traffic flow data packets entering or exiting the one computing node of the subset. In some embodiments, operations 1502, 1504, and 1506 are performed during a predetermined time interval. For example, the network traffic flow data packets may be stored at one minute intervals.

Operation 1508 may be followed by operation 1510. Operation 1510 illustrates moving the stored data packets to a data store after a predetermined time period. For example, the stored data packets may be moved to a data store every ten minutes. Operation 1510 may be followed by operation 1512. Operation 1512 illustrates sending a notification to one or more queues when the stored data packets are moved to the data store. For example, referring to FIG. 13, notification engine 1350 may send a notification to queue 1340 that storage 1320 may be accessed for stored network traffic flow information. In some embodiments, the one or more queues can be implemented as a distributed queue. Operation 1512 may be followed by operation 1514. Operation 1514 illustrates repeating said receiving data packets, examining, and storing for subsequent predetermined time periods. For example, operations 1504 through 1512 may be repeated at ten minute intervals or other time interval as configured by the provider network. Operation 1514 may be followed by operation 1516. Operation 1516 illustrates retrieving the queued notifications from the one or more queues and accessing the data packets in the data store in accordance with the queued notifications. For example, referring to FIG. 14, network flow publisher 1440 may be configured to be triggered by event notifications such as notifications 1470. Upon receiving a notification event, network flow publisher 1440 may access the associated network traffic flow information parcel from storage and generate a log such as log 1450 of FIG. 14 for the parcel. The notifications in the queue may be processed in first-in / first-out fashion so that the stored parcels of data may be processed in order. In some embodiments, if the one or more queues are implemented as a distributed queue, then the notifications can be retrieved from one of the queues and processed.

Operation 1516 may be followed by operation 1518. Operation 1518 illustrates processing the retrieved data packets to identify network traffic flow data that is to be provided to a programmatic interface. Operation 1518 may be followed by operation 1520. Operation 1520 illustrates sending notifications to the one or more queues for stored data packets for which said processing was not completed. For example, some network traffic flow data may be prevented from being published because a customer may have prevented due to security settings as configured for the customer's data. By keeping notifications in the queue for stored data packets that have not completed processing, repeated attempts to complete the processing can be made until processing can be completed or a maximum timeout is reached.

In some embodiments, the data traffic may include network traffic flow data. Additionally, the access may be provided by a publisher component configured to filter and publish the identified data traffic to the indicated customers. The notification may be sent by a status publisher component configured to receive indications that the captured data traffic is stored in the data store and send the notification to the publisher component. The data store may be a persistent storage resource configured to store the captured data traffic.

FIG. 16 illustrates an example operational procedure for providing access to data in a provider network allocating virtualized computing resources to customers of the provider network. In an embodiment, event-driven processing of network traffic flow information is implemented by the operations illustrated in FIG. 16, which begins with operation 1600 to start the operational procedure. Operation 1600 may be followed by operation 1602. Operation 1602 illustrates storing time-based groupings of network traffic flow data for the virtualized computing resources.

Operation 1602 may be followed by operation 1604. Operation 1604 illustrates providing notifications as the time-based groupings are stored. Operation 1604 may be followed by operation 1606, which illustrates retrieving one or more of the notifications. Operation 1606 may be followed by operation 1608, which illustrates processing the time-based groupings identified in the notifications. The processing operation may include identifying and publishing network traffic flow data that is associated with customers who have requested publication of the network traffic flow data for associated virtualized computing resources.

In some embodiments, the time-based groupings are determined based on consecutive time slots defined by the provider network. The time-based groupings may be stored based on selected subsets of the virtualized computing resources. The time-based groupings of network traffic flow data may be stored in a persistent storage resource configured to store the captured data traffic. Additionally, the selected subsets of the virtualized computing resources may be units of virtualized computing capacity.

In some embodiments, the notifications are stored and retrieved from one or more queues. The processing may include data traffic being accepted or rejected. The publishing may include making the processed network traffic flow available to a monitoring service for the virtualized computing resources, a network flow analyzer, or a customer-defined storage. The publishing may be performed by a publisher component configured to filter and publish the network traffic flow data to the associated customers.

In some embodiments, the selected subsets include a virtual private network, a subnet, or a virtual network interface. Furthermore, the notifications may be provided by a status publisher component configured to receive indications that the captured network traffic flow is stored and send the notifications to the publisher component.

It should be appreciated that the subject matter presented herein may be implemented as a computer process, a computer-controlled apparatus, or a computing system or an article of manufacture, such as a computer-readable storage medium. While the subject matter described herein is presented in the general context of program modules that execute on one or more computing devices, those skilled in the art will recognize that other implementations may be performed in combination with other types of program modules. Generally, program modules include routines, programs, components, data structures, and other types of structures that perform particular tasks or implement particular abstract data types.

Those skilled in the art will also appreciate that the subject matter described herein may be practiced on or in conjunction with other computer system configurations beyond those described herein, including multiprocessor systems, microprocessor-based or programmable consumer electronics, minicomputers, mainframe computers, handheld computers, personal digital assistants, e-readers, cellular telephone devices, special-purposed hardware devices, network appliances, and the like. The embodiments described herein may also be practiced in distributed computing environments, where tasks are performed by remote processing devices that are linked through a communications network. In a distributed computing environment, program modules may be located in both local and remote memory storage devices.

Networks established by or on behalf of an entity, such as a company or organization, to provide one or more services (such as various types of cloud-based computing or storage) accessible via the Internet and/or other networks to a distributed set of clients may be termed provider networks. Such a provider network may include one or more data centers hosting various resource pools, such as collections of physical and/or virtualized computer servers, storage devices, networking equipment, and the like, that may be used to implement and distribute the infrastructure and services offered by the provider network. The resources may in some embodiments be offered to clients in units called "instances," such as virtual or physical compute instances or storage instances. A virtual computing instance may, for example, comprise one or more servers with a specified computational capacity (which may be specified by indicating the type and number of CPUs, the main memory size, and so on) and a specified software stack (e.g., a particular version of an operating system, which may in turn run on top of a hypervisor).

A number of different types of computing devices may be used singly or in combination to implement the resources of the provider network in different embodiments, including general-purpose or special-purpose computer servers, storage devices, network devices, and the like. In some embodiments a client or user may be provided direct access to a resource instance, e.g., by giving a user an administrator login and password. In other embodiments, the provider network operator may allow clients to specify execution requirements for specified client applications and schedule execution of the applications on behalf of the client on execution platforms (such as application server instances, Java™ virtual machines (JVMs), general-purpose or special-purpose operating systems, platforms that support various interpreted or compiled programming languages, such as Ruby, Perl, Python, C, C++, and the like or high-performance computing platforms) suitable for the applications. This may be done without, for example, requiring the client to access an instance or an execution platform directly. A given execution platform may utilize one or more resource instances in some implementations; in other implementations, multiple execution platforms may be mapped to a single resource instance.

FIG. 17 illustrates an example computing environment in which the embodiments described herein may be implemented. FIG. 17 is a diagram schematically illustrating an example of a data center 1710 that can provide computing resources to users 1700a and 1700b (which may be referred herein singularly as "a user 1700" or in the plural as "the users 1700") via user computers 1707a and 1707b (which may be referred herein singularly as "a computer 1707" or in the plural as "the computers 1707") via a communications network 1730. Data center 1710 may be configured to provide computing resources for executing applications on a permanent or an as-needed basis. The computing resources provided by data center 1710 may include various types of resources, such as data processing resources, data storage resources, data communication resources, and the like. Each type of computing resource may be general-purpose or may be available in a number of specific configurations. For example, data processing resources may be available as virtual machine instances. The instances may be configured to execute applications, including web servers, application servers, media servers, database servers, and the like. Data storage resources may include file storage devices, block storage devices, and the like.

Each type or configuration of computing resource may be available in different sizes, such as large resources, consisting of many processors, large amounts of memory, and/or large storage capacity, and small resources consisting of fewer processors, smaller amounts of memory, and/or smaller storage capacity. Customers may choose to allocate a number of small processing resources as web servers and/or one large processing resource as a database server, for example.

Data center 1710 may include servers 1716a and 1716b (which may be referred herein singularly as "a server 1716" or in the plural as "the servers 1716") that provide computing resources available as virtual machine instances 1718a and 1718b (which may be referred herein singularly as "a virtual machine instance 1718" or in the plural as "the virtual machine instances 1718"). The virtual machine instances 1718 may be configured to execute applications, including web servers, application servers, media servers, database servers, and the like. Other resources that may be provided include data storage resources (not shown) and may include file storage devices, block storage devices, and the like.

Referring to FIG. 17, communications network 1730 may, for example, be a publicly accessible network of linked networks and possibly operated by various distinct parties, such as the Internet. In other embodiments, communications network 1730 may be a private network, such as, for example, a corporate or university network that is wholly or partially inaccessible to non-privileged users. In still other embodiments, communications network 1730 may include one or more private networks with access to and/or from the Internet.

Communications network 1730 may provide access to computers 1707. Computers 1707 may be computers utilized by customers 1700 or other customers of data center 1710. For instance, user computer 1707a or 1707b may be a server, a desktop or laptop personal computer, a tablet computer, a wireless telephone, a personal digital assistant (PDA), an e-book reader, a game console, a set-top box, or any other computing device capable of accessing data center 1710. User computer 1707a or 1707b may connect directly to the Internet (e.g., via a cable modem or a Digital Subscriber Line (DSL)). Although only two user computers 1707a and 1707b are depicted, it should be appreciated that there may be multiple user computers.

User computers 1707 may also be utilized to configure aspects of the computing resources provided by data center 1710. In this regard, data center 1710 might provide a web interface through which aspects of its operation may be configured through the use of a web browser application program executing on user computer 1707. Alternatively, a stand-alone application program executing on user computer 1707 might access an application programming interface (API) exposed by data center 1710 for performing the configuration operations. Other mechanisms for configuring the operation of the data center 1710, including deploying updates to an application, might also be utilized.

Servers 1716a and 1716b shown in FIG. 17 may be standard servers configured appropriately for providing the computing resources described above and may provide computing resources for executing one or more applications. In one embodiment, the computing resources may be virtual machine instances 1718. In the example of virtual machine instances, each of the servers 1716 may be configured to execute an instance manager 1770a or 1770b (which may be referred herein singularly as "an instance manager 1770" or in the plural as "the instance managers 1770") capable of executing the virtual machine instances. The instance managers 1770 may be a virtual machine monitor (VMM) or another type of program configured to enable the execution of virtual machine instances 1718 on servers 1716, for example. As discussed above, each of the virtual machine instances 1718 may be configured to execute all or a portion of an application.

It should be appreciated that although the embodiments disclosed above discuss the context of virtual machine instances, other types of implementations can be utilized with the concepts and technologies disclosed herein. For example, the embodiments disclosed herein might also be utilized with computing systems that do not utilize virtual machine instances.

In the example data center 1710 shown in FIG. 17, a router 1714 may be utilized to interconnect the servers 1716a and 1716b. Router 714 may also be connected to gateway 1740, which is connected to communications network 1730. Router 1714 may manage communications within networks in data center 1710, for example, by forwarding packets or other data communications as appropriate based on characteristics of such communications (e.g., header information including source and/or destination addresses, protocol identifiers, etc.) and/or the characteristics of the private network (e.g., routes based on network topology, etc.). It will be appreciated that, for the sake of simplicity, various aspects of the computing systems and other devices of this example are illustrated without showing certain conventional details. Additional computing systems and other devices may be interconnected in other embodiments and may be interconnected in different ways.

It should be appreciated that the network topology illustrated in FIG. 17 has been greatly simplified and that many more networks and networking devices may be utilized to interconnect the various computing systems disclosed herein. These network topologies and devices should be apparent to those skilled in the art.

It should also be appreciated that data center 1710 described in FIG. 17 is merely illustrative and that other implementations might be utilized. Additionally, it should be appreciated that the functionality disclosed herein might be implemented in software, hardware, or a combination of software and hardware. Other implementations should be apparent to those skilled in the art. It should also be appreciated that a server, gateway, or other computing device may comprise any combination of hardware or software that can interact and perform the described types of functionality, including without limitation desktop or other computers, database servers, network storage devices and other network devices, PDAs, tablets, cellphones, wireless phones, pagers, electronic organizers, Internet appliances, television-based systems (e.g., using set top boxes and/or personal/digital video recorders), and various other consumer products that include appropriate communication capabilities. In addition, the functionality provided by the illustrated modules may in some embodiments be combined in fewer modules or distributed in additional modules. Similarly, in some embodiments the functionality of some of the illustrated modules may not be provided and/or other additional functionality may be available.

The provider network may be configured with a deployment component to assist customers in the deployment of new instances of computing resources. The deployment component may receive a configuration from a customer that includes data describing how new instances should be configured. For example, the configuration might specify one or more applications or software components that should be installed in new instances, provide scripts, and/or other types of code to be executed in new instances, provide cache warming logic specifying how an application cache should be prepared, and other types of information. The deployment component utilizes the customer-provided configuration and cache warming logic to launch, configure, and prime new instances of computing resources.

In at least some embodiments, a computing device that implements a portion or all of one or more of the technologies described herein, including the techniques to implement the functionality of a system for event-driven processing of network traffic flow information may include a general purpose computer system that includes or is configured to access one or more computer-accessible media. FIG. 18 illustrates such a general-purpose computing device 1800. In the illustrated embodiment, computing device 1800 includes one or more processors 1810a, 1810b, and/or 1810n (which may be referred herein singularly as "a processor 1810" or in the plural as "the processors 1810") coupled to a system memory 1820 via an input/output (I/O) interface 1880. Computing device 1800 further includes a network interface 1840 coupled to I/O interface 1880.

In various embodiments, computing device 1800 may be a uniprocessor system including one processor 1810 or a multiprocessor system including several processors 1810 (e.g., two, four, eight, or another suitable number). Processors 1810 may be any suitable processors capable of executing instructions. For example, in various embodiments, processors 1810 may be general-purpose or embedded processors implementing any of a variety of instruction set architectures (ISAs), such as the x86, PowerPC, SPARC, or MIPS ISAs, or any other suitable ISA. In multiprocessor systems, each of processors 1810 may commonly, but not necessarily, implement the same ISA.

System memory 1820 may be configured to store instructions and data accessible by processor(s) 1810. In various embodiments, system memory 1820 may be implemented using any suitable memory technology, such as static random access memory (SRAM), synchronous dynamic RAM (SDRAM), nonvolatile/Flash-type memory, or any other type of memory. In the illustrated embodiment, program instructions and data implementing one or more desired functions, such as those methods, techniques, and data described above, are shown stored within system memory 1820 as code 1825 and data 1826.

In one embodiment, I/O interface 1880 may be configured to coordinate I/O traffic between processor 1810, system memory 1820, and any peripheral devices in the device, including network interface 1840 or other peripheral interfaces. In some embodiments, I/O interface 1880 may perform any necessary protocol, timing, or other data transformations to convert data signals from one component (e.g., system memory 1820) into a format suitable for use by another component (e.g., processor 1810). In some embodiments, I/O interface 1880 may include support for devices attached through various types of peripheral buses, such as a variant of the Peripheral Component Interconnect (PCI) bus standard or the Universal Serial Bus (USB) standard, for example. In some embodiments, the function of I/O interface 1880 may be split into two or more separate components, such as a north bridge and a south bridge, for example. Also, in some embodiments some or all of the functionality of I/O interface 1880, such as an interface to system memory 1820, may be incorporated directly into processor 1810.

Network interface 1840 may be configured to allow data to be exchanged between computing device 1800 and other device or devices 1860 attached to a network or network(s) 1850, such as other computer systems or devices as illustrated in FIGS. 11 through 18, for example. In various embodiments, network interface 1840 may support communication via any suitable wired or wireless general data networks, such as types of Ethernet networks, for example. Additionally, network interface 1840 may support communication via telecommunications/telephony networks, such as analog voice networks or digital fiber communications networks, via storage area networks, such as Fibre Channel SANs or via any other suitable type of network and/or protocol.

In some embodiments, system memory 1820 may be one embodiment of a computer-accessible medium configured to store program instructions and data as described above for FIGS. 11 and 12 for implementing embodiments of the corresponding methods and apparatus. However, in other embodiments, program instructions and/or data may be received, sent or stored upon different types of computer-accessible media. Generally speaking, a computer-accessible medium may include non-transitory storage media or memory media, such as magnetic or optical media, e.g., disk or DVD/CD coupled to computing device 1800 via I/O interface 1880. A non-transitory computer-accessible storage medium may also include any volatile or non-volatile media, such as RAM (e.g., SDRAM, DDR SDRAM, RDRAM, SRAM, etc.), ROM, etc., that may be included in some embodiments of computing device 800 as system memory 1820 or another type of memory. Further, a computer-accessible medium may include transmission media or signals such as electrical, electromagnetic or digital signals, conveyed via a communication medium such as a network and/or a wireless link, such as may be implemented via network interface 1840. Portions or all of multiple computing devices, such as those illustrated in FIG. 18, may be used to implement the described functionality in various embodiments; for example, software components running on a variety of different devices and servers may collaborate to provide the functionality. In some embodiments, portions of the described functionality may be implemented using storage devices, network devices, or special purpose computer systems, in addition to or instead of being implemented using general purpose computer systems. The term "computing device," as used herein, refers to at least all these types of devices and is not limited to these types of devices.

A network set up by an entity, such as a company or a public sector organization, to provide one or more services (such as various types of cloud-based computing or storage) accessible via the Internet and/or other networks to a distributed set of clients may be termed a provider network. Such a provider network may include numerous data centers hosting various resource pools, such as collections of physical and/or virtualized computer servers, storage devices, networking equipment, and the like, needed to implement and distribute the infrastructure and services offered by the provider network. The resources may in some embodiments be offered to clients in units called instances, such as virtual or physical computing instances or storage instances. A virtual computing instance may, for example, comprise one or more servers with a specified computational capacity (which may be specified by indicating the type and number of CPUs, the main memory size, and so on) and a specified software stack (e.g., a particular version of an operating system, which may in turn run on top of a hypervisor).

A number of different types of computing devices may be used singly or in combination to implement the resources of the provider network in different embodiments, including general-purpose or special-purpose computer servers, storage devices, network devices, and the like. In some embodiments a client or user may be provided direct access to a resource instance, e.g., by giving a user an administrator login and password. In other embodiments the provider network operator may allow clients to specify execution requirements for specified client applications and schedule execution of the applications on behalf of the client on execution platforms (such as application server instances, Java™ virtual machines (JVMs), general purpose or special purpose operating systems, platforms that support various interpreted or compiled programming languages, such as Ruby, Perl, Python, C, C++, and the like, or high-performance computing platforms) suitable for the applications, without, for example, requiring the client to access an instance or an execution platform directly. A given execution platform may utilize one or more resource instances in some implementations; in other implementations multiple execution platforms may be mapped to a single resource instance.

In many environments, operators of provider networks that implement different types of virtualized computing, storage, and/or other network-accessible functionality may allow customers to reserve or purchase access to resources in various resource acquisition modes. The computing resource provider may provide facilities for customers to select and launch the desired computing resources, deploy application components to the computing resources, and maintain an application executing in the environment. In addition, the computing resource provider may provide further facilities for the customer to quickly and easily scale up or scale down the numbers and types of resources allocated to the application, either manually or through automatic scaling, as demand for or capacity requirements of the application change. The computing resources provided by the computing resource provider may be made available in discrete units, which may be referred to as instances. An instance may represent a physical server hardware platform, a virtual machine instance executing on a server, or some combination of the two. Various types and configurations of instances may be made available, including different sizes of resources executing different operating systems (OS) and/or hypervisors and with various installed software applications, runtimes, and the like. Instances may further be available in specific availability zones, representing a data center or other geographic location of the underlying computing hardware, for example.

In some embodiments the provider network may be organized into a plurality of geographical regions, and each region may include one or more availability zones. An availability zone (which may also be referred to as an availability container) in turn may comprise one or more distinct locations or data centers, configured in such a way that the resources in a given availability zone may be isolated or insulated from failures in other availability zones. That is, a failure in one availability zone may not be expected to result in a failure in any other availability zone. Thus, the availability profile of a resource instance is intended to be independent of the availability profile of a resource instance in a different availability zone. Clients may be able to protect their applications from failures at a single location by launching multiple application instances in respective availability zones. At the same time, in some implementations, inexpensive and low latency network connectivity may be provided between resource instances that reside within the same geographical region (and network transmissions between resources of the same availability zone may be even faster).

The provider network may make instances available "on-demand," allowing a customer to select a number of instances of a specific type and configuration (e.g. size, platform, tenancy, availability zone, and the like) and quickly launch the instances for deployment. On-demand instances may further be added or removed as needed, either manually or automatically through auto scaling, as demand for or capacity requirements changes over time. The customer may incur ongoing usage costs related to their on-demand instances, based on the number of hours of operation and/or the actual resources utilized, for example.

The computing resource provider may also make reserved instances available to the customer. Reserved instances may provide the customer with the ability to reserve a number of a specific type and configuration of instances for a fixed term, such as one year or three years, for a low, upfront cost in exchange for reduced hourly or other usage costs, for example, if and when the instances are launched. This may allow the customer to defer costs related to scaling up the deployed application in response to increase in demand, while ensuring that the right resources will be available when needed. While reserved instances provide customers with reliable, stand-by capacity for scaling of their application, purchasing reserved instances may also lock the customer into a specific number, type, and/or configuration of computing resource in a specific availability zone for a longer period than desired. If the technical architecture or needs of the application change, the customer may not be able to realize a return on the customer's investment in the reserved instances.

Operators of such provider networks may in some instances implement a flexible set of resource reservation, control, and access interfaces for their clients. For example, a resource manager of the provider network may implement a programmatic resource reservation interface (e.g., via a web site or a set of web pages) that allows clients to learn about, select, purchase access to and/or reserve resource instances. In some embodiments discussed below where an entity, such as a resource manager or a pricing optimizer, is described as implementing one or more programmatic interfaces, such as a web page or an API, an interface manager subcomponent of that entity may be responsible for the interface-related functionality. In many embodiments equivalent interface-related functionality may be implemented by a separate or standalone interface manager, external to the resource manager. Such an interface may include capabilities to allow browsing of a resource catalog and details and specifications of the different types or sizes of resources supported and the different reservation types or modes supported, pricing models, and so on.

In some embodiments, such as in FIG. 19, a data center 1900 may be viewed as a collection of shared computing resources and/or shared infrastructure. For example, as shown in FIG. 19, a data center 1900 may include virtual machine slots 1904, physical hosts 1902, power supplies 1906, routers 1908, isolation zone 1910, and geographical location 1912. A virtual machine slot 1904 may be referred to as a slot or as a resource slot. A physical host 1902 may be shared by multiple virtual machine slots 904, each slot 1904 being capable of hosting a virtual machine, such as a guest domain. Multiple physical hosts 1902 may share a power supply 1906, such as a power supply 1906 provided on a server rack. A router 1908 may service multiple physical hosts 1902 across several power supplies 1906 to route network traffic. An isolation zone 1910 may service many routers 1908, the isolation zone 1910 being a group of computing resources that may be serviced by redundant resources, such as a backup generator. Isolation zone 1910 may reside at a geographical location 1912, such as a data center 1900. A provisioning server 1914 may include a memory and processor configured with instructions to analyze user data and rank available implementation resources using determined roles and shared resources/infrastructure in the calculation. The provisioning server 1914 may also manage workflows for provisioning and deprovisioning computing resources as well as detecting health and/or failure of computing resources.

A provisioning server 1914 may determine a placement of the resource within the data center. In some embodiments, this placement may be based at least in part on available computing resources and/or relationships between computing resources. In one embodiment, the distance between resources may be measured by the degree of shared resources. This distance may be used in the ranking of resources according to role. For example, a first system on a host 1902 that shares a router 1908 with a second system may be more proximate to the second system than to a third system only sharing an isolation zone 1910. Depending on an application, it may be desirable to keep the distance low to increase throughput or high to increase durability. In another embodiment, the distance may be defined in terms of unshared resources. For example, two slots 1904 sharing a router 1908 may have a distance of a physical host 1902 and a power supply 1906. Each difference in resources may be weighted differently in a distance calculation.

A placement calculation may also be used when selecting a prepared resource to transfer to a client account. In one embodiment, a client requests a virtual machine having an operating system. The provisioning server 1914 may determine that the request may be satisfied with a staged volume in a slot 1904. A placement decision may be made that determines which infrastructure may be desirable to share and which infrastructure is undesirable to share. Using the placement decision, a staged volume that satisfies at least some of the placement decision characteristics may be selected from a pool of available resources. For example, a pool of staged volumes may be used in a cluster computing setup. When a new volume is requested, a provisioning server 1914 may determine that a placement near other existing volumes is desirable for latency concerns. Therefore, the decision may find that sharing a router 1908 is desirable but sharing a supply 1906 and physical host 1902 is undesirable. A volume in the pool may then be selected that matches these attributes and placed preferably on a same router 1908 as the other volumes but not the same physical host 1902 or power supply 1906. In other examples of placement decisions, such as those relating to a database shard, sharing of infrastructure may be less desirable and a volume may be selected that has less infrastructure in common with other related volumes.

Each of the processes, methods, and algorithms described in the preceding sections may be embodied in, and fully or partially automated by, code modules executed by one or more computers or computer processors. The code modules may be stored on any type of non-transitory computer-readable medium or computer storage device, such as hard drives, solid state memory, optical disc, and/or the like. The processes and algorithms may be implemented partially or wholly in application-specific circuitry. The results of the disclosed processes and process steps may be stored, persistently or otherwise, in any type of non-transitory computer storage such as, e.g., volatile or non-volatile storage.

The various features and processes described above may be used independently of one another, or may be combined in various ways. All possible combinations and subcombinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements may be added to, removed from, or rearranged compared to the disclosed example embodiments.

It will also be appreciated that various items are illustrated as being stored in memory or on storage while being used, and that these items or portions of thereof may be transferred between memory and other storage devices for purposes of memory management and data integrity. Alternatively, in other embodiments some or all of the software modules and/or systems may execute in memory on another device and communicate with the illustrated computing systems via inter-computer communication. Furthermore, in some embodiments, some or all of the systems and/or modules may be implemented or provided in other ways, such as at least partially in firmware and/or hardware, including, but not limited to, one or more application-specific integrated circuits (ASICs), standard integrated circuits, controllers (e.g., by executing appropriate instructions, and including microcontrollers and/or embedded controllers), field-programmable gate arrays (FPGAs), complex programmable logic devices (CPLDs), etc. Some or all of the modules, systems and data structures may also be stored (e.g., as software instructions or structured data) on a computer-readable medium, such as a hard disk, a memory, a network, or a portable media article to be read by an appropriate drive or via an appropriate connection. The systems, modules and data structures may also be transmitted as generated data signals (e.g., as part of a carrier wave or other analog or digital propagated signal) on a variety of computer-readable transmission media, including wireless-based and wired/cable-based media, and may take a variety of forms (e.g., as part of a single or multiplexed analog signal, or as multiple discrete digital packets or frames). Such computer program products may also take other forms in other embodiments. Accordingly, the present invention may be practiced with other computer system configurations.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements, and/or steps. Thus, such conditional language is not generally intended to imply that features, elements and/or steps are in any way required for one or more embodiments or that one or more embodiments necessarily include logic for deciding, with or without author input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While certain example embodiments have been described, these embodiments have been presented by way of example only, and are not intended to limit the scope of the inventions disclosed herein. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions and changes in the form of the methods and systems described herein may be made without departing from the spirit of the inventions disclosed herein. The accompanying claims and their equivalents are intended to cover such forms or modifications as would fall within the scope and spirit of certain of the inventions disclosed herein.

Embodiments of the present disclosure can be described in view of the following clauses:
1. A method of providing network traffic flow data for a plurality of computing nodes communicating over a network, each of the computing nodes comprising a plurality of virtual machines, the method comprising:
   receiving information for monitoring a subset of the computing nodes;
   during a predetermined time interval:
      receiving data packets being sent over the network;
      examining the data packets to determine if the data packets are network traffic flow data packets entering or exiting one of the subset of computing nodes;
      storing data packets that are determined to be network traffic flow data packets entering or exiting the one computing node of the subset;
   after a predetermined time period, moving the stored data packets to a data store;
   sending a notification to one or more queues when the stored data packets are moved to the data store;
   repeating said receiving data packets, examining, and storing for subsequent predetermined time periods;
   retrieving the notifications from the one or more queues and accessing the data packets in the data store in accordance with the notifications;
   processing the retrieved data packets to identify network traffic flow data that is to be provided to a programmatic interface; and
   sending notifications to the one or more queues for stored data packets for which said processing was not completed.
2. The method of clause 1, wherein the predetermined time interval is a subset of the predetermined time period.
3. The method of clauses 1 or 2, further comprising filtering and publishing the identified data traffic.
4. The method of any of clauses 1-3, wherein the notifications are sent in response to indications that the stored data packets have been moved to the data store.
5. The method of any of clauses 1-4, wherein the one or more queues are implemented as a distributed queue.
6. A system configured to provide access to data in a provider network allocating virtualized computing resources to customers of the provider network, the system comprising:
   at least one memory having stored therein computer instructions that, upon execution by one or more processors of the system, at least cause the system to:
   store time-based groupings of network traffic flow data for the virtualized computing resources;
   provide notifications as the time-based groupings are stored; and
   retrieve one or more of the notifications and process the time-based groupings identified in the one or more notifications, said processing including identifying and publishing network traffic flow data that is associated with users who have requested publication of the network traffic flow data for associated virtualized computing resources.
7. The system of clause 6, wherein the time-based groupings are determined based on a series of consecutive time slots defined by the provider network.
8. The system of clauses 6 or 7, wherein the time-based groupings are stored based on selected subsets of the virtualized computing resources.
9. The system of clause 8, wherein the selected subsets of the virtualized computing resources are units of virtualized computing capacity.
10. The system of any of clauses 6-9, wherein the notifications are stored in and retrieved from one or more queues.
11. The system of any of clauses 6-10, wherein the processing comprises identification of data traffic that has been accepted or rejected.
12. The system of any of clauses 6-11, wherein the publishing comprises making the processed groupings available to one or more of a monitoring service for the virtualized computing resources, a network flow analyzer, or a customer-defined storage.
13. The system of any of clauses 8-12, wherein the selected subsets include a virtual private network, a subnet, or a virtual network interface.
14. The system of any of clauses 6-13, wherein the publishing is performed by a publisher component configured to filter and publish the network traffic flow data to the associated users.
15. The system of clause 14, wherein the providing the notifications is performed by a status publisher component configured to receive indications that the network traffic flow is stored and send the notifications to the publisher component.
16. The system of any of clauses 6-15, wherein the time-based groupings of network traffic flow data is stored in a persistent storage resource configured to store the network traffic flow data.
17. A non-transitory computer-readable storage medium having stored thereon computer-readable instructions, the computer-readable instructions comprising instructions that upon execution on a computing node, at least cause:
   storing network traffic flow data for groupings of virtualized computing resources of a provider network;
   queueing notifications that network traffic flow data has been stored for at least one grouping for selected time ranges; and
   accessing the queued notifications and processing the stored network traffic flow data identified in the queued notifications , said processing including identifying network traffic flow data associated with customers of the provider network who have requested access to network traffic flow data for associated virtualized computing resources.
18. The non-transitory computer-readable medium of clause 17, further comprising instructions that upon execution on a computing node, at least cause publication of the identified network traffic flow data.
19. The non-transitory computer-readable medium of clause 18, wherein publication for a grouping is terminated when one or more conditions for the publication are not met.
20. The non-transitory computer-readable medium of any of clauses 17-19, further comprising instructions that upon execution on a computing node, at least cause cessation of processing for a grouping and resumption of processing of the grouping at a subsequent time.

## Claims

1. A system, comprising:
a set of computer systems (108) that is configured to:
receive a request from a customer of a computing resource service provider to enable logging for a virtual computer system instance (220) supported by computing resources of the system and programmatically managed by the customer;
transmit a command to cause network log information to be obtained for a network interface (218) of the customer used by the virtual computer system instance;
receive one or more data packets at the network interface of the system, where the one or more data packets are associated with a set of network flows directed to the virtual computer system instance;
filter the one or more data packets at a firewall (104) based at least in part on one or more security policies, where the one or more security policies indicate whether to allow or deny a particular data packet based at least in part on information contained in the data packet;
as a result of fulfillment of the received request cause logging to be enabled for network traffic flowing through the network interface, obtain log information (114) corresponding to the filtering of the one or more data packets flowing through the network interface and a set of actions performed by the firewall in filtering the one or more data packets; and
provide the log information to a destination accessible to the customer.

2. The system of claim 1, wherein the destination further comprises an intrusion prevention system configured to apply the one or more security policies.

3. The system of claim 2, wherein the intrusion prevention system is further configured to update the one or more security policies based at least in part on the provided log information.

4. The system of claim 3, wherein the intrusion prevention system is further configured to provide the update to the one or more security policies to the firewall.

5. The system of claim 1, further comprising a memory which further includes instructions that, when executed by one or more processors (214), cause the system to provide a notification to the customer based at least in part on an alarm set by the customer with a metrics service.

6. The system of claim 1, further comprising a memory which further includes instructions that, when executed by one or more processors, cause the system to filter the obtained log information based at least in part on one or more attributes of the log information as a result of receiving, from the customer associated with the virtual computer system instance, a request to filter the obtained log information.

7. The system of claim 1, further comprising a memory which further includes instructions that, when executed by one or more processors, cause the system to disable logging for the virtual computer system instance based at least in part on receiving, from the customer associated with the virtual computer system instance, an API call to terminate logging of the virtual computer system instance.

8. The system of claim 1, further comprising a memory which further includes instructions that, when executed by one or more processors, cause the system to provide the log information to another destination based at least in part on receiving, from the customer associated with the virtual computer system instance, an API call indicating the other destination.

9. A method, comprising:
fulfilling a request from a customer of a computing resource service provider to enable logging for a virtual computer system instance supported by computing resources hosted by a computing resource service provider;
transmitting a command to cause network log information to be obtained for a network interface of the customer used by the virtual computer system instance;
filtering network traffic at a firewall, at least a portion of the network traffic directed to a set of computing resources used at least in part to support the virtual computer system instance managed by the customer based at least in part on one or more security policies;
as a result of fulfillment of the received request, obtaining, from the firewall, network traffic log information corresponding to network traffic flowing through the network interface;
retrieving, from the obtained network log information, log information corresponding to the virtual computer system instance; and
providing the retrieved log information to a storage service for persistent storage.

10. The method of claim 9, further comprising providing the retrieved log information to a metrics service.

11. The method of claim 9, further comprising generating a visualization indicating one or more attributes of the portion of the network traffic directed to the virtual computer system instance based at least in part on the retrieved log information.

12. The method of claim 9, further comprising retrieving log information for a set of virtual computer system instances managed by the customer, where at least a portion of the set of virtual computer system instances are supported by the set of computing resources and the virtual computer system instance is a member of the set of virtual computer system instances.

13. The method of claim 9, further comprising providing the retrieved log information to a third party service provider not responsible for the computer system.

14. The method of claim 9, further comprising:
retrieving additional network log information corresponding to a second set of computing resources hosted by the computing resource service provider and used to support a second virtual computer system instance managed by a second customer; and
wherein providing the retrieved network log information to the storage service for persistent storage further includes providing the additional network log information to the storage service for persistent storage.

15. The method of claim 9, further comprising disabling logging for the virtual computer system instance based at least in part on receiving a command from the customer to disable logging.

## Patentansprüche

1. System, Folgendes umfassend:
einen Satz Computersysteme (108), der zu Folgendem konfiguriert ist:
Empfangen einer Anfrage von einem Kunden eines Rechenressourcendienstleisters, Protokollieren für eine virtuelle Computersystem-Instanz (220) zu aktivieren, die von den Rechenressourcen des Systems unterstützt und vom Kunden programmgesteuert verwaltet wird;
Übertragen eines Befehls, um zu veranlassen, dass Netzwerkprotokollinformationen für eine Netzwerkschnittstelle (218) des Kunden erhalten werden, die von der virtuellen Computersystem-Instanz benutzt wird;
Empfangen eines oder mehrerer Datenpakete an der Netzwerkschnittstelle des Systems, wobei das eine oder die mehreren Datenpakete einem Satz von Netzwerkflüssen zugeordnet sind, der zu der virtuellen Computersystem-Instanz geleitet wird;
Filtern des einen oder der mehreren Datenpakete an einer Firewall (104) basierend zumindest teilweise auf einer oder
mehreren Sicherheitsrichtlinien, wobei die eine oder mehreren Sicherheitsrichtlinien anzeigen, ob ein bestimmtes Datenpaket zugelassen oder abgelehnt wird, basierend zumindest teilweise auf in dem Datenpaket enthaltenen Informationen;
infolge der Erfüllung der empfangenen Anfrage, Veranlassen, dass Protokollieren für Netzwerkverkehr, der durch die Netzwerkschnittstelle fließt, aktiviert wird, Erhalten von Protokollinformationen (114), die dem Filtern des einen oder der mehreren Datenpakete, die durch die Netzwerkschnittstelle fließen, und einem Satz von Aktionen, der von der Firewall beim Filtern des einen oder der mehreren Datenpakete durchgeführt wird, entsprechen; und
Bereitstellen der Protokollinformationen an einen Zielort, der für den Kunden zugänglich ist.

2. System nach Anspruch 1, wobei der Zielort ferner ein Intrusionspräventionssystem umfasst, das dazu konfiguriert ist, die eine oder mehreren Sicherheitsrichtlinien anzuwenden.

3. System nach Anspruch 2, wobei das Intrusionspräventionssystem ferner dazu konfiguriert ist, die eine oder mehreren Sicherheitsrichtlinien basierend zumindest teilweise auf den bereitgestellten Protokollinformationen zu aktualisieren.

4. System nach Anspruch 3, wobei das Intrusionspräventionssystem ferner dazu konfiguriert ist, die Aktualisierung der einen oder mehreren Sicherheitsrichtlinien der Firewall bereitzustellen.

5. System nach Anspruch 1, ferner umfassend einen Speicher, der ferner Anweisungen beinhaltet, die bei Ausführung durch einen oder mehrere Prozessoren (214) das System dazu veranlassen, dem Kunden eine Benachrichtigung bereitzustellen, basierend zumindest teilweise auf einem Alarm, der von dem Kunden mit einem Metrik-Service gestellt wurde.

6. System nach Anspruch 1, ferner umfassend einen Speicher, der ferner Anweisungen beinhaltet, die bei Ausführung durch einen oder mehrere Prozessoren das System dazu veranlassen, die erhaltenen Protokollinformationen zu filtern, basierend zumindest teilweise auf einem oder mehreren Attributen der Protokollinformationen infolge des Empfangens einer Anfrage von dem der virtuellen Computersystem-Instanz zugeordneten Kunden, die erhaltenen Loginformationen zu filtern.

7. System nach Anspruch 1, ferner umfassend einen Speicher, der ferner Anweisungen beinhaltet, die bei Ausführung durch einen oder mehrere Prozessoren das System dazu veranlassen, das Protokollieren für die virtuelle Computersystem-Instanz zu deaktivieren, basierend zumindest teilweise auf dem Empfangen eines API-Aufrufs zum Beenden des Protokolierens der virtuellen Computersystem-Instanz von dem der virtuellen Computersystem-Instanz zugeordneten Kunden.

8. System nach Anspruch 1, ferner umfassend einen Speicher, der ferner Anweisungen beinhaltet, die bei Ausführung durch einen oder mehrere Prozessoren das System dazu veranlassen, die Protokollinformationen einem anderen Zielort bereitzustellen, basierend zumindest teilweise auf dem Empfangen eines API-Aufrufs, der den anderen Zielort angibt, von dem der virtuellen Computersystem-Instanz zugeordneten Kunden.

9. Verfahren, Folgendes umfassend:
Erfüllen einer Anfrage von einem Kunden eines Rechenressourcendienstleisters, Protokollieren für eine virtuelle Computersystem-Instanz zu aktivieren, die von Rechenressourcen unterstützt wird, die von einem Rechenressourcendienstleister gehostet werden;
Übertragen eines Befehls, um zu veranlassen, dass Netzwerkprotokollinformationen für eine Netzwerkschnittstelle des Kunden erhalten werden, die von der virtuellen Computersystem-Instanz benutzt wird;
Filtern von Netzwerkverkehr an einer Firewall, wobei mindestens ein Teil des Netzwerkverkehrs zu einem Satz Rechenressourcen geleitet wird, der zumindest teilweise dazu benutzt wird, die virtuelle Computersystem-Instanz zu unterstützen, die vom Kunden verwaltet wird, basierend zumindest teilweise auf einer oder mehrerer Sicherheitsrichtlinien;
infolge der Erfüllung der empfangenen Anfrage, Erhalten, von der Firewall, von Netzwerkverkehr-Protokollinformationen, die dem Netzwerkverkehr entsprechen, der durch die Netzwerkschnittstelle fließt;
Abrufen, von den erhaltenen Netzwerkprotokollinformationen, von Protokollinformationen, die der virtuellen Computersystem-Instanz entsprechen; und
Bereitstellen der abgerufenen Protokollinformationen an einen Speicherservice zur permanenten Speicherung.

10. Verfahren nach Anspruch 9, ferner umfassend Bereitstellen der abgerufenen Protokollinformationen an einen Metrik-Service.

11. Verfahren nach Anspruch 9, ferner umfassend Erzeugen einer Visualisierung, die eine oder mehrere Attribute des Teils des Netzwerkverkehrs angibt, der zu der virtuellen Computersystem-Instanz geleitet wird, basierend zumindest teilweise auf den abgerufenen Protokollinformationen.

12. Verfahren nach Anspruch 9, ferner umfassend Abrufen von Protokollinformationen für einen Satz von virtuellen Computersystem-Instanzen, der von dem Kunden verwaltet wird, wobei mindestens ein Teil des Satzes virtueller Computersystem-Instanzen durch den Satz von Rechenressourcen unterstützt wird und die virtuelle Computersystem-Instanz ein Element des Satzes virtueller Computersystem-Instanzen ist.

13. Verfahren nach Anspruch 9, ferner umfassend Bereitstellen der abgerufenen Protokollinformationen an einen Drittdienstleister, der nicht für das Computersystem verantwortlich ist.

14. Verfahren nach Anspruch 9, ferner umfassend:
Abrufen zusätzlicher Netzwerkprotokollinformationen, die einem zweiten Satz von Rechenressourcen entsprechen, der von dem Rechenressourcendienstleister gehostet und dazu benutzt wird, eine zweite virtuelle Computersystem-Instanz zu unterstützen,
die von einem zweiten Kunden verwaltet wird; und
wobei das Bereitstellen der abgerufenen Netzwerkprotokollinformationen an den Speicherservice zur permanenten Speicherung ferner das Bereitstellen der zusätzlichen Netzwerkprotokollinformationen an den Speicherservice zur permanenten Speicherung beinhaltet.

15. Verfahren nach Anspruch 9, ferner umfassend Deaktivieren des Protokollierens für die virtuelle Computersystem-Instanz basierend zumindest teilweise auf dem Empfangen eines Befehls von dem Kunden, das Protokollieren zu deaktivieren.

## Revendications

1. Système, comprenant :
un ensemble de systèmes d'ordinateur (108) qui est conçu pour :
recevoir une demande à partir d'un client d'un fournisseur de service de ressources informatiques pour activer une journalisation pour une instance de système d'ordinateur virtuelle (220) prise en charge par des ressources informatiques du système et gérées de manière programmatique par le client ;
transmettre une instruction pour amener des informations de journal de réseau à être obtenues pour une interface de réseau (218) du client utilisée par l'instance de système d'ordinateur virtuelle ;
recevoir un ou plusieurs paquets de données au niveau de l'interface de réseau du système, où l'un ou les plusieurs paquets de données sont associés à un ensemble de flux de réseau dirigé vers l'instance de système d'ordinateur virtuelle ;
filtrer l'un ou les plusieurs paquets de données au niveau d'un pare-feu (104) sur la base au moins en partie d'une ou de plusieurs politiques de sécurité, où l'une ou les plusieurs politiques de sécurité indiquent s'il faut autoriser ou refuser un paquet de données particulier sur la base au moins en partie d'informations contenues dans le paquet de données ;
suite à une réponse à la demande reçue amener une journalisation à être activée pour un trafic de réseau circulant à travers l'interface de réseau, obtenir des informations de journal (114) correspondant au filtrage de l'un ou des plusieurs paquets de données circulant à travers l'interface de réseau et à un ensemble d'actions mises en œuvre par le pare-feu dans un filtrage de l'un ou des plusieurs paquets de données ; et
fournir les informations de journal à une destination accessible pour le client.

2. Système selon la revendication 1, dans lequel la destination comprend en outre un système de prévention d'intrusion conçu pour appliquer l'une ou les plusieurs politiques de sécurité.

3. Système selon la revendication 2, dans lequel le système de prévention d'intrusion est en outre conçu pour mettre à jour l'une ou les plusieurs politiques de sécurité sur la base au moins en partie des informations de journal fournies.

4. Système selon la revendication 3, dans lequel le système de prévention d'intrusion est en outre conçu pour fournir la mise à jour à l'une ou aux plusieurs politiques de sécurité au pare-feu.

5. Système selon la revendication 1, comprenant en outre une mémoire qui inclut en outre des instructions qui, lorsqu'elles sont exécutées par un ou plusieurs processeurs (214), amènent le système à fournir une notification au client sur la base au moins en partie d'une alarme réglée par le client avec un service de mesure.

6. Système selon la revendication 1, comprenant en outre une mémoire qui inclut en outre des instructions qui, lorsqu'elles sont exécutées par un ou plusieurs processeurs, amènent le système à filtrer les informations de journal obtenues sur la base au moins en partie d'un ou de plusieurs attributs des informations de journal suite à une réception, à partir du client associé à l'instance de système d'ordinateur virtuelle, d'une demande pour filtrer les informations de journal obtenues.

7. Système selon la revendication 1, comprenant en outre une mémoire qui inclut en outre des instructions qui, lorsqu'elles sont exécutées par un ou plusieurs processeurs, amènent le système à désactiver une journalisation pour l'instance de système d'ordinateur virtuelle sur la base au moins en partie d'une réception, à partir du client associé à l'instance de système d'ordinateur virtuelle, d'un appel d'API pour terminer une journalisation de l'instance de système d'ordinateur virtuelle.

8. Système selon la revendication 1, comprenant en outre une mémoire qui inclut en outre des instructions qui, lorsqu'elles sont exécutées par un ou plusieurs processeurs, amènent le système à fournir les informations de journal à une autre destination sur la base au moins en partie d'une réception, à partir du client associé à l'instance de système d'ordinateur virtuelle, d'un appel d'API indiquant l'autre destination.

9. Procédé, comprenant :
la réponse à une demande à partir d'un client d'un fournisseur de service de ressources informatiques pour activer une journalisation pour une instance de système d'ordinateur virtuelle prise en charge par des ressources informatiques hébergées par un fournisseur de service de ressources informatiques ;
la transmission d'une instruction pour amener des informations de journal de réseau à être obtenues pour une interface de réseau du client utilisée par l'instance de système d'ordinateur virtuelle ;
le filtrage d'un trafic de réseau au niveau d'un pare-feu, au moins une portion du trafic de réseau dirigé vers un ensemble de ressources informatiques utilisées au moins en partie pour prendre en charge l'instance de système d'ordinateur virtuelle gérée par le client sur la base au moins en partie d'une ou de plusieurs politiques de sécurité ;
suite à une réponse à la demande reçue, l'obtention, à partir du pare-feu, d'informations de journal de trafic de réseau correspondant à un trafic de réseau circulant à travers l'interface de réseau ;
la récupération, à partir des informations de journal de réseau obtenues, d'informations de journal correspondant à l'instance de système d'ordinateur virtuelle ; et
la fourniture des informations de journal récupérées à un service de stockage pour un stockage persistant.

10. procédé selon la revendication 9, comprenant en outre la fourniture des informations de journal récupérées à un service de mesure.

11. Procédé selon la revendication 9, comprenant en outre la génération d'une visualisation indiquant un ou plusieurs attributs de la portion du trafic de réseau dirigé vers l'instance de système d'ordinateur virtuelle sur la base au moins en partie des informations de journal récupérées.

12. Procédé selon la revendication 9, comprenant en outre la récupération d'informations de journal pour un ensemble d'instances de système d'ordinateur virtuelles gérées par le client, où au moins une portion de l'ensemble d'instances de système d'ordinateur virtuelles est prise en charge par l'ensemble de ressources informatiques et l'instance de système d'ordinateur virtuelle est un élément de l'ensemble d'instances de système d'ordinateur virtuelles.

13. Procédé selon la revendication 9, comprenant en outre la fourniture des informations de journal récupérées à un fournisseur de service tiers non responsable du système d'ordinateur.

14. Procédé selon la revendication 9, comprenant en outre :
la récupération d'informations de journal de réseau supplémentaires correspondant à un second ensemble de ressources informatiques hébergées par le fournisseur de service de ressources informatiques et utilisées pour prendre en charge une seconde instance de système d'ordinateur virtuelle gérée par un second client ; et
dans lequel la fourniture des informations de journal de réseau récupérées au service de stockage pour un stockage persistant inclut en outre la fourniture des informations de journal de réseau supplémentaires au service de stockage pour un stockage persistant.

15. Procédé selon la revendication 9, comprenant en outre la désactivation d'une journalisation pour l'instance de système d'ordinateur virtuelle sur la base au moins en partie d'une réception d'une instruction à partir du client pour désactiver une journalisation.
